# EUROPEAN PATENT APPLICATION

(11) **EP 4 528 526 A1**
(43) Date of publication of application: **26.03.2025**
(21) Application number: 23870401.9
(22) Date of filing: 15.09.2023
(51) Int. Cl.: G06F 16/11

(54) **APPLICATION DATA MANAGEMENT METHOD, AND DEVICE, PRODUCT AND MEDIUM**

(30) Priority: 30.09.2022 CN 202211215773
(71) Applicant: Huawei Technologies Co., Ltd., Shenzhen, Guangdong 518129 (CN)
(72) Inventor: BI, Sheng, Shenzhen, Guangdong 518129 (CN)
(74) Representative: Körber, Martin Hans
(86) International application number: PCT/CN2023/119139
(87) International publication number: WO 2024/067167

(57) **Abstract**

This application is applied to the terminal field, and provides a data management method applied to a terminal device. The method includes: when an operation for accessing a file of the terminal device is detected, displaying a list including an application to which the file of the terminal device belongs; displaying a file category list when an operation of selecting a first application in a first application list is detected, where a file category in the file category list is a part or all of a plurality of preset file categories; and when an operation of selecting a first file category in a first file category list is detected, displaying a file that is of the first application and that belongs to the first file category. Therefore, the terminal device can classify files in storage space based on applications, and can further classify files of each application based on file categories, so that a user can manage the files based on a file classification result of the terminal device. This saves labor resources, and further improves user experience.

## Description

This application claims priority to Chinese Patent Application No. 202211215773.2, filed with the China National Intellectual Property Administration on September 30, 2022 and entitled "APPLICATION DATA MANAGEMENT METHOD, DEVICE, PRODUCT, AND MEDIUM", which is incorporated herein by reference in its entirety.

### TECHNICAL FIELD

This application relates to the terminal field, and in particular, to an application data management method, a device, a product, and a medium.

### BACKGROUND

After obtaining a storage permission of a terminal, a plurality of applications all can randomly read and write files in storage space of the terminal. As a result, an operating system of the terminal cannot distinguish between applications from which the files stored in the terminal come, and cannot distinguish between file categories of files such as a cache file and a media file (for example, an image, a video, and audio) stored by a user. Therefore, the terminal cannot classify the files in the storage space based on applications to which the files belong or file categories of the files. In this case, when managing the storage space, for example, when the user needs to delete an image stored by the user by using an application, the user needs to determine one by one whether the files in the storage space belongs to the application and whether categories of the files is an image, resulting in an increase in an operation difficulty.

In some solutions, operation personnel of a third-party cleaning application may periodically analyze applications to which the files in the storage space belong and categories of the files, and generate an analysis rule based on an analysis result, so that after the third-party cleaning application scans the storage space of the terminal, a file category of each file and an application to which the file belongs are obtained.

However, the operation personnel analyze, based on each folder created by an application, a category of a file stored in the folder. As a result, an analysis result of a file category of each application varies. When the user needs to manage files of different applications, the user further needs to understand usage and/or a source of a file in each category, resulting in low efficiency of managing the files by the user.

### SUMMARY

This application provides an application data management method, a device, a product, and a medium.

According to a first aspect, an application data management method is provided, applied to a terminal device, where the method includes: displaying a first interface when a first operation for accessing a file of the terminal device is detected, where the first interface includes a first application list, and an application in the first application list is an application to which the file of the terminal device belongs; displaying a second interface when a second operation of selecting a first application in the first application list is detected, where the second interface includes a first file category list, a file category in the first file category list is a file category to which a file of the first application belongs, and the file category in the first file category list is a part or all of a plurality of file categories preset by a system of the terminal device; and displaying a third interface when a third operation of selecting a first file category in the first file category list is detected, where the third interface includes a file that is of the first application and that belongs to the first file category.

In the foregoing solution, when a user manages the file in the terminal device, the terminal device may first display the application list. After the user selects an application, a file category list of the application is displayed, and then the user may manage a file of the application that is in a specific file category. The preset file categories include a private file and a public file. The public file further includes a video, audio, an image shot by a camera, a file received or downloaded in a short range, another image, a document, and the like, where the another image is an image not shot by the camera nor received or downloaded in a short range.

Further, the user may manage a file based on the application list and the file category list that are displayed by the terminal device, for example, perform an operation like deletion and sharing. The user does not need to distinguish between applications to which files belong and categories of the files, and the user can directly select, based on the application list and the file category list, a to-be-managed file that is of a target application and in a target file category.

In addition, because there is the preset file category, when the user views a file of each application, the terminal device can display the file by category based on a same file category. When the application does not have a file in a specific file category, the terminal device may not display the file category. Therefore, a problem that classification manners of files of applications are different does not occur, and the user does not need to understand usage and/or a source of a file in each category when managing data of different applications, so that the user manages the file in the terminal device more conveniently.

With reference to the first aspect, in some implementations, a fourth interface is displayed when a fourth operation of selecting a second application in the first application list is detected, where the fourth interface includes a second file category list, a file category in the second file category list is a file category to which a file of the second application belongs, and the file category in the second file category list is a part or all of the plurality of file categories preset by the system; and a fifth interface is displayed when a fifth operation of selecting a second file category in the second file category list is detected, where the fifth interface includes a file that is of the second application and that belongs to the second file category.

In the foregoing solution, when receiving managing of the file of the second application by the user, the terminal device also displays the file of the second application by category based on the file categories preset by the system. In other words, the terminal device can display files of different applications by category based on same file categories. Therefore, when managing files of different applications, the user selects files based on a same classification manner. In this method, the user does not need to spend more time in understanding file classification manners of different applications when managing files of the applications. By using this method, the user can perform file management on different applications that use same file classification, thereby improving efficiency of managing the file of the terminal device by the user.

With reference to the first aspect, in some implementations, the first application list and the first file category list are determined based on an information record table of the terminal device, where the information record table includes a unique identifier of the application to which the file of the terminal device belongs and a file category to which the file of the terminal device belongs.

In the foregoing solution, the terminal device stores, in the information record table, the application to which the file belongs and the file category of the file in the terminal device, where the information record table may further include a unique identifier of the file, for example, an absolute path of the file, a size of the file, and creation time of the file. Further, the application to which the file belongs and the file category to which the file belongs may be determined based on the information record table. When the user needs to manage the file, the user can view the file based on the application to which the file belongs and the file category to which the file belongs, and then manage the file, so that the user manages the file in the terminal device more conveniently, thereby improving user experience.

With reference to the first aspect, in some implementations, the method further includes: detecting a sixth operation of writing a first file into the terminal device; in response to the sixth operation, obtaining a unique identifier of an application to which the first file belongs and determining a file category to which the first file belongs, where the file category to which the first file belongs is one of the plurality of file categories preset by the system; and recording, in the information record table, the unique identifier of the application to which the first file belongs and the file category to which the first file belongs.

In the foregoing solution, in a process in which the application writes a file into the terminal device, the terminal device determines the application to which the file to be written belongs and a file category of the file to be written. In this way, the terminal device can store the application to which the written file belongs and the file category to which the written file belongs into the information record table. When the user needs to manage the file, the user can view the file category based on the application to which the file belongs and the file category to which the file belongs, so that the user can obtain a more accurate and intuitive file category, and the user can manage the file in the terminal device more conveniently.

With reference to the first aspect, in some implementations, the method further includes: the detecting a sixth operation of writing a first file into the terminal device includes: detecting the sixth operation of writing the first file into the terminal device by invoking a first file write interface; and the obtaining a unique identifier of an application to which the first file belongs includes: obtaining a unique identifier of an application that invokes the first file write interface; and/or the determining a file category to which the first file belongs includes: determining a file category corresponding to the first file write interface as the file category to which the first file belongs, where the plurality of file categories preset by the system each correspond to one file write interface; or determining a file category indicated by a category parameter of the first file write interface as the file category to which the first file belongs, where the plurality of file categories preset by the system each correspond to one category parameter of the first file interface.

In the foregoing solution, when writing a file, an application invokes, based on a file category of the file to be written, a file write interface corresponding to the file category or different parameters of a file write interface. That is, different file write interfaces are provided for different file categories, or different parameters of the file write interface are provided. For example, the file write interfaces may include a private file write interface and a public file write interface. The public file write interface further includes a video write sub-interface, an audio write sub-interface, a sub-interface for writing an image shot by the camera, a sub-interface for writing a file received or downloaded in a short range, an interface for writing another image, and a document write sub-interface. Alternatively, the public file write interface further includes different parameters such as a video, audio, an image shot by the camera, a file received or downloaded in a short range, another image, and a document. In addition, the terminal device further correspondingly provides a read interface corresponding to the foregoing interface, for example, a private file read interface and a public file read interface. The public file read interface further includes a video read sub-interface, an audio read sub-interface, a sub-interface for reading an image shot by the camera, a sub-interface for reading a file received or downloaded in a short range, a sub-interface for reading another image, and a document read sub-interface.

Further, the terminal device may determine, by using the file write interface or the parameter of the file write interface used when the application writes the file, the file category of the file to be written. Therefore, a problem that classification manners of files of applications are different does not occur, and the user does not need to understand usage and/or a source of a file in each category when managing files of different applications. In this way, by using the method provided in this solution, the user can obtain a more accurate and intuitive file category, so that the user can manage a file in the terminal device more conveniently.

With reference to the first aspect, in some implementations, the first file write interface is located at a framework layer of the terminal device.

In the foregoing solution, the first file write interface may be an interface provided for the application by a public file read/write framework located at the framework layer of the terminal device or a private file read/write framework located at the framework layer of the terminal device.

With reference to the first aspect, in some implementations, the method further includes: detecting a seventh operation of uninstalling the first application; determining a plurality of files of the first application based on unique identifiers that are of applications to which a plurality of files belong and that are in the information record table; determining, based on file categories and file sizes that are of the plurality of files of the first application and that are in the information record table, sizes of storage space occupied by files in different file categories in the files of the first application; and displaying the sizes of the storage space respectively occupied by the files in the different file categories in the files of the first application.

In the foregoing solution, when the user uninstalls an application, the terminal device can obtain, based on the information record table, sizes of storage space occupied by files of the to-be-uninstalled application that are in different categories, and then display the sizes of storage space occupied by the files of the application that are in the different categories, so that the user can choose to retain or delete the files of the application that are in the different categories when uninstalling the application, and the user does not lose a file due to application uninstallation.

According to a second aspect, an application data management method is provided, applied to a terminal device, where the method includes: displaying a first interface when a first operation for accessing a file of the terminal device is detected, where the first interface includes a first file category list, a file category in the first file category list is a file category to which the file of the terminal device belongs, and a file category in the first file category list is a part or all of a plurality of categories preset by a system of the terminal device; displaying a second interface when a second operation of selecting a first file category in the first file category list is detected, where the second interface includes a first application list, and an application in the first application list is an application to which a file belonging to the first file category list belongs; and displaying a third interface when a third operation of selecting a first application in the first application list is detected, where the third interface includes a file that is in the first file category and that belongs to the first application.

In the foregoing solution, when the user manages the file in the terminal device, the terminal device may first display the file category list. After the user selects a file category, an application having a file in the file category is displayed, and then the user may manage a file of the application that is in a specific file category. Further, the user may manage the file based on the application list and the file category list that are displayed by the terminal device, for example, perform an operation like deletion and sharing. The user does not need to distinguish between applications to which files belong and categories of the files, and can directly select, based on the application list and the file category list, a to-be-managed file that is of a target application and in a target file category.

In addition, because there is the preset file category, when the user views a file of each application, the terminal device can display the file by category based on a same file category. When the application does not have a file in a specific file category, the terminal device may not display the file category. Therefore, a problem that classification manners of files of applications are different does not occur, and the user does not need to understand usage and/or a source of a file in each category when managing data of different applications, so that the user manages a file in the terminal device more conveniently.

With reference to the second aspect, in some implementations, the first application list and the first file category list are determined based on an information record table of the terminal device, where the information record table includes a unique identifier of an application to which the file of the terminal device belongs and the file category to which the file of the terminal device belongs.

With reference to the second aspect, in some implementations, the method further includes: detecting a fourth operation of writing a first file into the terminal device; in response to the fourth operation, obtaining a unique identifier of an application to which the first file belongs, and determining a file category to which the first file belongs, where the file category to which the first file belongs is one of the plurality of file categories preset by the system; and recording, in the information record table, the unique identifier of the application to which the first file belongs and the file category to which the first file belongs.

With reference to the second aspect, in some implementations, the method further includes: the detecting a fourth operation of writing a first file into the terminal device includes: detecting the fourth operation of writing the first file into the terminal device by invoking a first file write interface; and the obtaining a unique identifier of an application to which the first file belongs includes: obtaining a unique identifier of an application that invokes the first file write interface; and/or the determining a file category to which the first file belongs includes: determining a file category corresponding to the first file write interface as the file category to which the first file belongs, where the plurality of file categories preset by the system each correspond to one file write interface; or determining a file category indicated by a category parameter of the first file write interface as the file category to which the first file belongs, where the plurality of file categories preset by the system each correspond to one category parameter of the first file interface.

With reference to the second aspect, in some implementations, the first file write interface is located at a framework layer of the terminal device.

With reference to the second aspect, in some implementations, the method further includes: detecting a fifth operation of uninstalling the first application; determining a plurality of files of the first application based on unique identifiers that are of applications to which a plurality of files belong and that are in the information record table; determining, based on file categories and file sizes that are of the plurality of files of the first application and that are in the information record table, sizes of storage space occupied by files in different file categories in the files of the first application; and displaying the sizes of the storage space respectively occupied by the files in the different file categories in the files of the first application.

According to a third aspect, a first operation of writing a first file into a terminal device is detected; in response to the first operation, a unique identifier of an application to which the first file belongs is obtained, and a category to which the first file belongs is determined, where the category to which the first file belongs is one of a plurality of categories preset by a system of the terminal device; and the unique identifier of the application to which the first file belongs and the file category to which the first file belongs are recorded.

In the foregoing solution, in a process in which the application writes a file into the terminal device, the terminal device determines the application to which the file to be written belongs and a file category of the file to be written. In this way, the terminal device can store the application to which the written file belongs and the file category to which the written file belongs into an information record table. When a user needs to manage the file, the user can view the file category based on the application to which the file belongs and the file category to which the file belongs, so that the user can obtain a more accurate and intuitive file category, and the user can manage the file in the terminal device more conveniently.

According to a fourth aspect, this application provides an electronic device, including a processor and a memory, where the memory is configured to store instructions, the processor is configured to execute the instructions, and when executing the instructions, the processor performs the method described in the first aspect, the second aspect, or the third aspect.

According to a fifth aspect, this application provides a computer-readable storage medium, where the computer-readable storage medium stores instructions, and when the instructions are run on an electronic device, the method described in the first aspect, the second aspect, or the third aspect is performed.

According to a sixth aspect, this application provides a computer program product, where the computer program product includes computer instructions, and when the computer instructions are executed by an electronic device, the electronic device performs the method described in the first aspect, the second aspect, or the third aspect.

In conclusion, according to the application data management method, the device, the product, and the medium provided in embodiments of this application, a specified file write interface is set in the terminal, a file category of a file in storage space can be determined through an interface used when an application writes data, and an application to which the file belongs can be determined based on a unique identifier of the application that writes the file. In this way, no extra human resource is required to analyze the file category, and therefore, the user does not delete a file by mistake due to an error in file category analysis. Therefore, based on this application, the terminal device can classify files in the storage space based on applications, and can further classify files of each application based on file categories, or classify files based on file categories and then based on applications. In this way, the user can manage the files based on a file classification result of the terminal 100. This saves labor resources, and further improves user experience.

### BRIEF DESCRIPTION OF DRAWINGS

To describe the technical solutions in embodiments of this application more clearly, the following briefly describes the accompanying drawings for describing embodiments.
FIG. 1 is a diagram of an interface of managing cache garbage according to an embodiment of this application;
FIG. 2 is a diagram of an interface of managing a file based on a file category according to an embodiment of this application;
FIG. 3 is a diagram of an interface of managing an image by a terminal according to an embodiment of this application;
FIG. 4 is a diagram of an interface of managing a file of an application by a third-party cleaning application according to an embodiment of this application;
FIG. 5 is a diagram of a framework of reading/writing a file by an application according to an embodiment of this application;
FIG. 6(A) and FIG. 6(B) are diagrams of interfaces of managing an application based on a preset file directory according to an embodiment of this application;
FIG. 7A is a diagram of a hardware structure of a terminal according to an embodiment of this application;
FIG. 7B is a diagram of a software structure of a terminal according to an embodiment of this application;
FIG. 8 is a schematic flowchart of an application installation method according to an embodiment of this application;
FIG. 9(A) and FIG. 9(B) are diagrams of interfaces of installing an application according to an embodiment of this application;
FIG. 10 is a schematic flowchart of a method for writing data by an application according to an embodiment of this application;
FIG. 11 is a diagram of an interface of a folder preset by a system of a terminal according to an embodiment of this application;
FIG. 12 is a schematic flowchart of a method for managing a file of an application by a terminal according to an embodiment of this application;
FIG. 13(A) and FIG. 13(B) are diagrams of interfaces of viewing a file of an application by using a phone manager according to an embodiment of this application;
FIG. 14(A) and FIG. 14(B) are diagrams of interfaces of managing a public file according to an embodiment of this application;
FIG. 15(A) and FIG. 15(B) are diagrams of interfaces of sorting public files based on applications according to an embodiment of this application;
FIG. 16(A) and FIG. 16(B) are diagrams of interfaces of viewing information about a public file according to an embodiment of this application;
FIG. 17(A) and FIG. 17(B) are diagrams of interfaces of managing a public file according to an embodiment of this application;
FIG. 18(A) and FIG. 18(B) are diagrams of interfaces of deleting a public file according to an embodiment of this application;
FIG. 19 is a schematic flowchart of an application uninstallation method according to an embodiment of this application;
FIG. 20(A) and FIG. 20(B) are diagrams of interfaces of uninstalling an application according to an embodiment of this application; and
FIG. 21 is a diagram of a structure of an application data management apparatus according to an embodiment of this application.

### DESCRIPTION OF EMBODIMENTS

Illustrative embodiments of this application include but are not limited to an application data management method, a device, a product, and a medium.

To better understand the solutions of this application, the following first describes a process in which an application writes a file into a terminal.

Currently, a user may install and uninstall an application on a terminal based on a requirement. When being installed, the application needs to obtain a storage permission from the terminal. After the user grants the storage permission to the application on the terminal, the application can randomly access storage space of a memory of the terminal. In this way, the application may create a folder in the storage space to store a cache (for example, page information of a browsed web page) generated by the application when the application runs, a media file (for example, an image, a video, and audio) stored by the user by using the application, and the like. In addition, the application may further write the foregoing data into a folder created by an operating system of the terminal. For example, the application writes a generated image into a system album, and the user can view, by using album software provided by the terminal, images generated by all applications.

Therefore, a plurality of applications installed on the terminal may all randomly read and write files in the storage space of the terminal. As a result, the user and the operating system of the terminal cannot distinguish between applications from which the files stored in the terminal come, and cannot distinguish which files are system files and which files are cache files. As a result, the user cannot conveniently manage the storage space. For example, file deletion cannot be conveniently performed to release the storage space. When the user cannot conveniently delete a file in the storage space, there tends to be more files in the storage space of the terminal, a large quantity of residual files occupy the storage space, and available storage space of the terminal becomes less. Consequently, the system of the terminal becomes slower.

To resolve the foregoing problems, in some embodiments, operation personnel of a third-party cleaning application periodically analyze a file category of a file in the storage space, to generate an analysis rule based on an analysis result. In addition, the third-party cleaning application is used to scan the storage space of the terminal, and then a scanned file is analyzed according to the foregoing analysis rule, so that a file category of each file and an application to which the file belongs are obtained. For example, the third-party cleaning application may analyze, according to the analysis rule, whether the file is source code of the application, a cache file, a media file, or the like, and display an analysis result to the user. In this way, the user can manage the storage space based on scanning and analysis results of the third-party cleaning application.

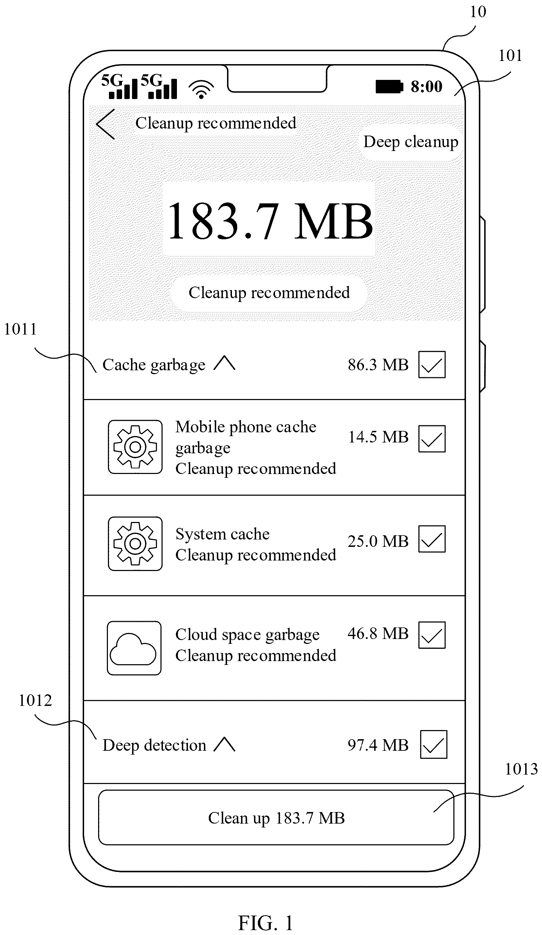

For example, the third-party cleaning application may scan storage space of a mobile phone 10, analyze usage of each file in the storage space of the mobile phone 10, and display a cache file stored in the mobile phone 10. FIG. 1 shows an example of an interface 101 in which a third-party cleaning application in the mobile phone 10 displays a cache file obtained through scanning. That there are a total of 86.3 megabytes (Megabytes, MB) of cache garbage in the mobile phone 10 is displayed in a display box 1011 in the interface 101, where the cache garbage is temporary data generated when an operating system of the mobile phone 10 runs an application, for example, data of a browsed web page. The cache garbage is further specifically classified into mobile phone cache garbage, system cache garbage, and cloud space garbage. The mobile phone cache garbage includes cache files generated when all applications in the mobile phone 10 run, the system cache includes cache files generated when the operating system of the mobile phone 10 runs, and the cloud space garbage includes cache files in files stored in a cloud server by the mobile phone 10.

The third-party cleaning application further scans media files such as audio, an image, and a video that are generated by applications in the mobile phone 10. For example, that the mobile phone 10 further stores 97.8 MB of media files, which is determined after deep detection is performed on the mobile phone 10, is displayed in a display box 1012 in the interface 101. The user may delete, by tapping a control 1013, the cache garbage and the file obtained through deep detection.

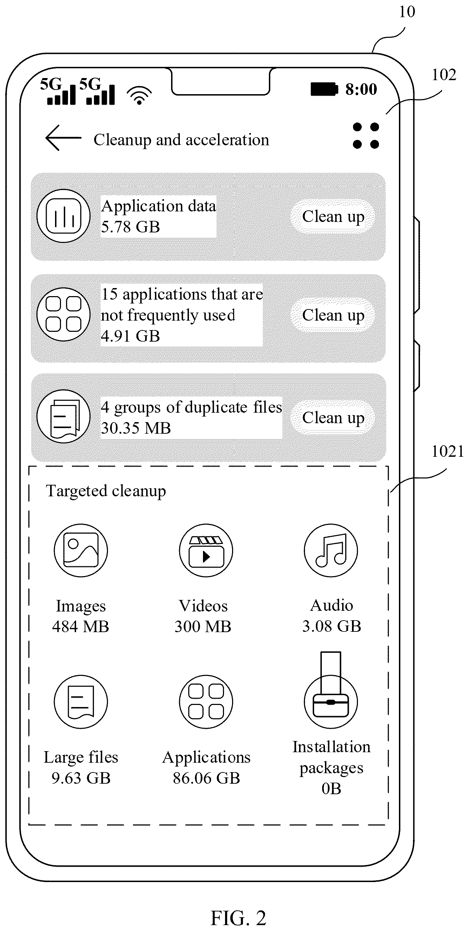

In some other embodiments, the third-party cleaning application may further classify the scanned media files based on file categories. For example, the media files in the mobile phone 10 may be classified into an image, a video, audio, a large file, an application, an installation package, and the like based on file categories. For example, as shown in FIG. 2, an interface 102 displayed by the third-party cleaning application in the mobile phone 10 includes a display box 1021, and the user may manage a file based on a file category in the display box 1021.

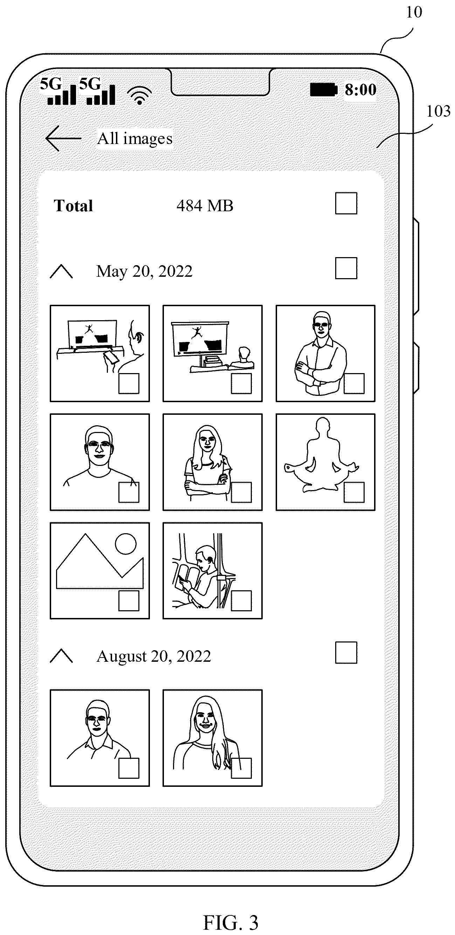

However, because the application may randomly write the foregoing media files into any folder, and the third-party cleaning application classifies the files only based on file categories, for example, based on suffixes of the files (for example, .jpg, .avi, or .exe) and data sizes of the files, the third-party cleaning application cannot analyze an application from which each file specifically comes. For example, after the user taps an icon corresponding to an image in the display box 1021 in FIG. 2, the third-party cleaning application displays, on the mobile phone 10, an interface 103 shown in FIG. 3. As shown in the interface 103, the third-party cleaning application can only sort images in a chronological order, but cannot classify the images based on applications.

Therefore, when clearing files in a specific category, the user cannot obtain an application from which the files in the category separately come. When the user needs to delete a media file generated by an application, the user further needs to distinguish one by one between files generated by the application, which consumes a large amount of time of the user and affects user experience.

To resolve the foregoing problem, in some other embodiments, the operation personnel of the third-party cleaning application may further periodically analyze a folder created by each application and a file generated by the application, and record an analysis result as a rule. The third-party cleaning application scans the storage space of the terminal, and analyzes scanned folders and files in the folders according to the foregoing rule, to obtain an application to which each file belongs and usage of the file. In this way, the user can manage data generated by a specific application.

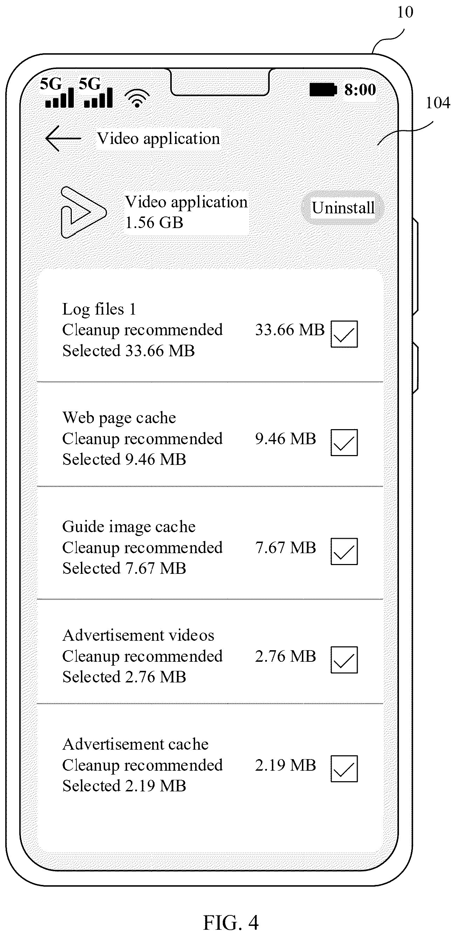

For example, as shown in FIG. 4, the third-party cleaning application may determine, in the storage space of the mobile phone 10 by analyzing a file generated by a "video application", a folder created by the video application, and display a file in each directory in the folder. The user may delete the file generated by the video application based on a requirement.

However, an analysis result of the operation personnel depends on a directory of a folder created by the application. As a result, a final presented result may be too professional and difficult to be understood by a common user. As shown in an interface 104 in FIG. 4, files generated by the video application include a "log file", a "web page cache", and a "guide image cache". It is difficult for the common user to understand differences between the foregoing categories of files, and consequently, the common user cannot manage the files.

In addition, the operation personnel of the third-party cleaning application need to periodically analyze files generated by the application and the operating system, for the third-party cleaning application to scan and analyze the files in the storage space to manage the storage space. In this case, each time the application or the operating system is updated, the operation personnel need to analyze usage of the generated files again. This consumes a large amount of labor resources. In addition, an analysis result of the operation personnel may not be completely correct. When the analysis result of the operation personnel is incorrect, the user may delete a useful file, or even delete a program file of the application by mistake. As a result, the application or the operating system cannot run normally, affecting user experience.

To resolve the foregoing problems, in some other embodiments, the terminal may further limit a storage area of a file generated by an application. The terminal allocates independent storage space to each application, a file of the application can be stored in a corresponding folder, and another application cannot access data of the application. In this way, the terminal can determine, based on the folder to which the file belongs, the application to which the file belongs.

However, all data of the application can be stored only in the folder, and content of the application that is stored in the folder is not divided. In addition, because another application cannot access files of the application, the third-party application cannot classify the files of the application. If the user wants to manage data corresponding to the application, for example, delete some files, the user can only select to delete the entire folder. As a result, the user still cannot conveniently manage the storage space.

In conclusion, it is still difficult to implement convenient management of the storage space in the foregoing solutions. When the user cannot conveniently manage the storage space, for example, conveniently delete the file in the storage space, it is difficult to release the storage space of the terminal in a timely manner, which affects system running of the terminal.

To resolve the foregoing problems, this application provides an application data management method, applied to a terminal 100. In the method, a file read/write framework is set in the terminal 100, a plurality of file write interfaces are set in the file read/write framework, and each file write interface corresponds to a different file category. When writing files in different categories into the terminal 100, an application needs to perform writing through interfaces corresponding to the file categories. In addition, the terminal 100 obtains a unique identifier of the application that writes the file, to determine the application to which the file belongs. In this way, when an application writes a file by invoking an interface of a type corresponding to a category of the file to be written, a unique identifier of the application that writes the file and the category of the file to be written are stored in an information record table. That is, the information record table stores a unique identifier of an application to which each file belongs and a file category.

In this way, the terminal 100 does not need to analyze, by using a third-party cleaning application, a file generated by an application. Based on the application to which each file belongs and the file category to which the file belongs that are in the information record table, the user can search for the file based on the application and the file category, and perform an operation like deletion or retention on the file based on a requirement. In the method, no extra human resource is required to analyze a file, and therefore, the user does not delete a file by mistake due to an error in file category analysis.

The file category includes a private file and a public file. Because privacy permissions of different files are different, based on the privacy permissions of the files, a file that can be shared by the application with another application is referred to as the public file, and a file that is not shared by the application with another application is referred to as the private file. Further, the public file is specifically classified into sub-file categories by category, such as a video, audio, an image shot by a camera, a file received or downloaded in a short range, another image, and a document, where the another image is an image not shot by the camera nor received or downloaded in a short range. It should be understood that the public file and the private file may further include another sub-file category. Classification of sub-file categories of the public file and the private file is not specifically limited in this application.

In some embodiments, the file read/write framework may also be referred to as a user data access framework. The public file may also be referred to as a media file. The private file also includes files such as an image, a video, and a document, for example, a user password, chat records, and database records in an application. However, the private file is a file that is not shared by the application with another application. For example, the application receives an image, but the user does not store the image in the terminal 100. In this case, the image is a private file. After the user stores the image in the terminal 100, the image is a public file. In addition, a cache file generated by the application may also be classified into a public file or a private file based on a requirement.

The file read/write framework may be a software module, and is generally located at an application framework layer of the terminal 100. The file read/write framework may include a private file read/write framework and a public file read/write framework. The private file read/write framework provides the application with a private file read/write interface for the application to write or read the private file. The public file read/write framework provides the application with a public file read/write interface for the application to write or read the public file. The public file write interface may further include an interface for writing/reading an image shot by a camera (camera), an interface for writing/reading another image (image), a video (video) read/write interface, an audio (audio) read/write interface, a document (document) read/write interface, an interface for writing/reading a file received or downloaded in a short range, and the like. It should be understood that, when there is another file category, the file read/write framework may further include another read/write interface corresponding to the file category. Classification of the file interface category is not specifically limited in this application.

In some embodiments, the public file read/write framework provides the application with a public file read/write interface. The public file read/write interface may further include different category parameters. Different file categories correspond to different category parameters of the public file read/write interface. The category parameters may indicate that the file categories are a video, audio, an image shot by a camera, a file received or downloaded in a short range, another image, and a document.

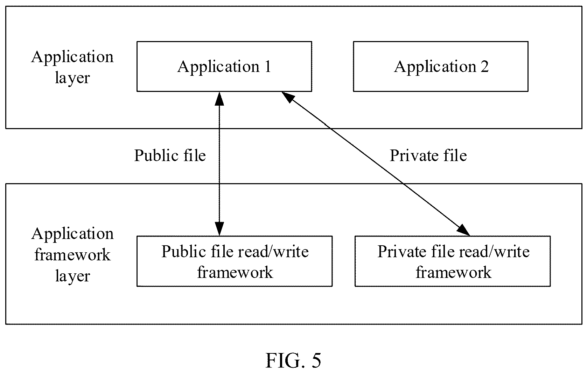

As shown in FIG. 5, the application framework layer of the terminal 100 may include a private file read/write framework and a public file read/write framework. An application 1 can write a private file into the terminal 100 through a private file write interface provided by the private file read/write framework, and can write a public file into the terminal 100 through a public file write interface provided by the public file read/write framework.

In addition, as described above, in some embodiments, the user wants to manage a file of an application. Therefore, in some other embodiments of this application, an application data management method is disclosed. In the method, when managing a file, the user may obtain, by using an information record table, an application to which a file of the terminal 100 belongs, and then an application list of all applications is displayed on the terminal 100. The user may select a target application based on a requirement, and then the terminal 100 displays a file category list based on a file category of a file of the target application in the information record table. The user may select a target file category, and then manage a file in the target file category in the target application. The user may specifically perform operations such as deletion, moving, copying, and sharing.

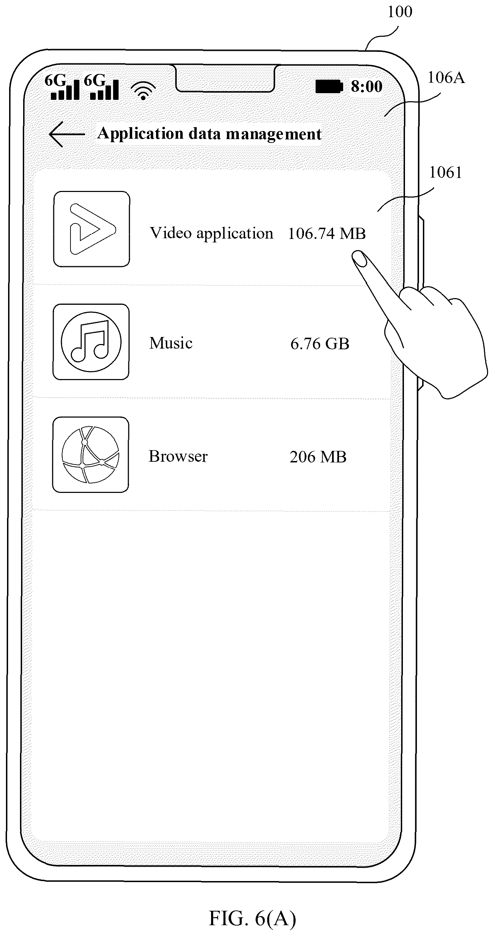

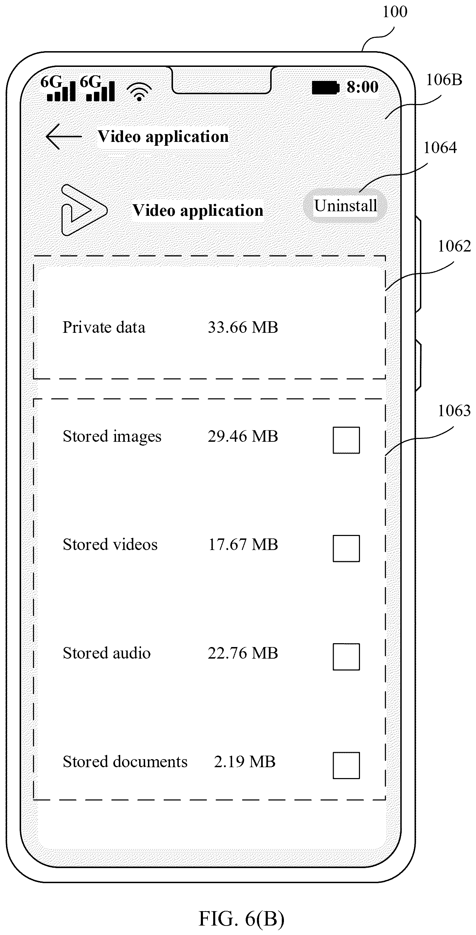

FIG. 6(A) shows an example of an application data management interface 106A on the terminal 100. Sizes of space occupied by three applications, namely, a "video application", "music", and a "browser", on the terminal 100 in storage space are displayed in the interface 106A. When the user taps a display box 1061, the terminal 100 displays files of the "video application" based on file categories as shown in FIG. 6(B). Because the private file is a file that cannot be accessed by another application, only a size of storage space occupied by a private file of the "video application" is displayed in application data management, and a specific file in the private file of the "video application" cannot be displayed. On the contrary, the public file may be accessed by another application. Public files of the "video application" are displayed in application data management based on four categories, namely, "stored images", "stored videos", "stored audio", and "stored documents". The user may select a corresponding file category by tapping an area in a display box 1063.

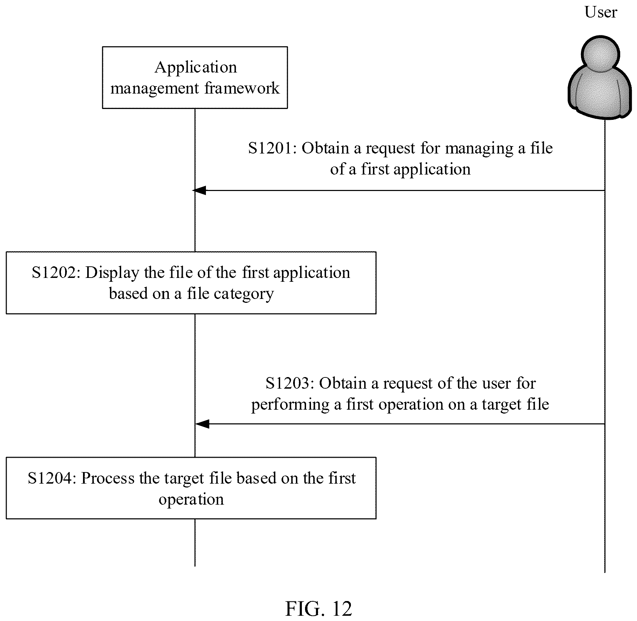

In some other embodiments, based on file management performed by the user, all file categories of files of the terminal 100 may be obtained by using the information record table, and then all the file categories on the terminal 100 are displayed. The user may select a target file category based on a requirement, and then the terminal 100 displays an application list based on an application that is in the information record table and that has a file in the target file category. The user may select a target application, and then manage a file of the target application that is in the target file category. For details, refer to FIG. 12 and related descriptions below.

In this way, the terminal 100 can classify files in the storage space based on applications, and can further classify files of each application based on file categories, or first classify files based on file categories, and further classify files in each file category based on applications, so that the user can conveniently manage some files of an application that are in a specific category based on a file classification result of the terminal 100, instead of deleting an entire folder corresponding to the application.

In conclusion, in the application data management method provided in this application, the terminal 100 can determine an application to which a file in the storage space belongs and a file category without analyzing, by using a third-party cleaning application, a file generated by an application. In this method, no extra human resource is required to analyze the file. In addition, the terminal 100 directly determines the file category through an interface used when the application writes the file, and therefore, the user does not delete the file by mistake due to an error in file category analysis. Therefore, the terminal 100 can classify the files in the storage space based on applications and based on file categories, so that the user can manage the files based on the file classification result of the terminal 100. This saves labor resources, and further improves user experience.

The terminal 100 may be a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or a dedicated camera (for example, a single-lens reflex camera or a card camera). A specific type of the terminal 100 is not limited in this application.

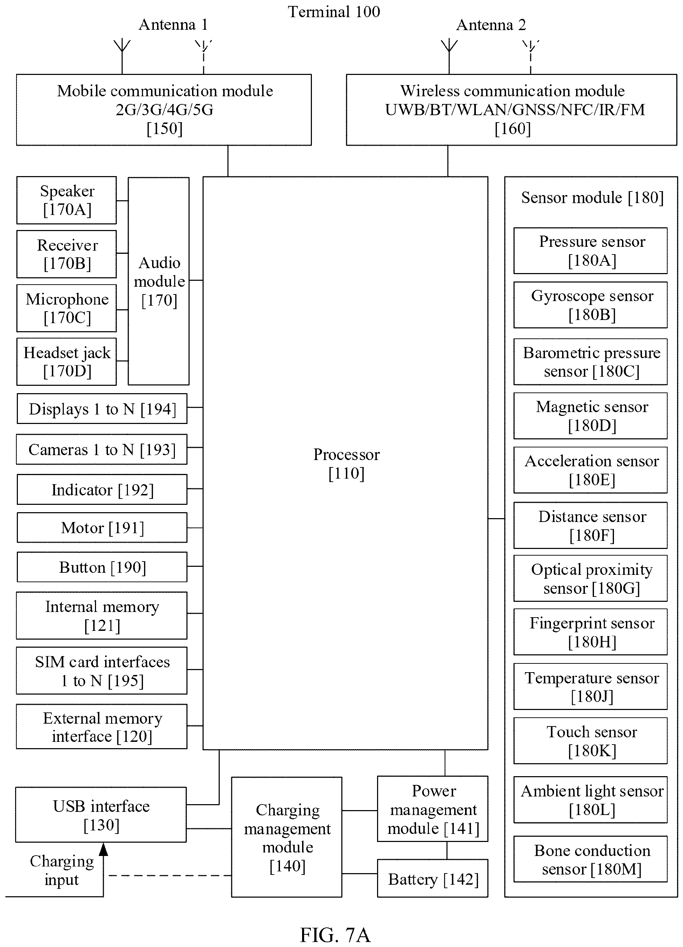

The terminal 100 in embodiments of this application is first described below. FIG. 7A shows a diagram of a structure of the example terminal 100 according to an embodiment of this application.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the terminal 100. The controller may generate an operation control signal based on an instruction operation code and a time sequence signal, to complete control of instruction reading and instruction execution.

A memory may be further disposed in the processor 110, and is configured to store instructions and data.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). The I2S interface may be used to perform audio communication. The PCM interface may also be used to perform audio communication, and sample, quantize, and code an analog signal. The UART interface is a universal serial data bus, and is used to perform asynchronous communication. The bus may be a two-way communication bus. The bus converts to-be-transmitted data between serial communication and parallel communication. The MIPI interface may be configured to connect the processor 110 to a peripheral device like the display 194 or the camera 193. The GPIO interface may be configured by using software. The USB interface 130 is an interface that conforms to a USB standard specification, and may be specifically a mini USB interface, a micro USB interface, a USB type-C interface, or the like.

It may be understood that an interface connection relationship between the modules shown in this embodiment of this application is merely an example for description, and constitutes no limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive charging input from a charger. The charger may be a wireless charger or a wired charger.

The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization.

The mobile communication module 150 may provide a solution to wireless communication including 2G/3G/4G/5G applied to the terminal 100. The mobile communication module 150 may include at least one filter, a switch, a power amplifier, a low noise amplifier (low noise amplifier, LNA), and the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. After being processed by the baseband processor, the low-frequency baseband signal is transferred to the application processor.

The wireless communication module 160 may provide a wireless communication solution that is applied to the terminal 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

The terminal 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like. In some embodiments, the terminal 100 may include one or N displays 194, where N is a positive integer greater than 1.

In some embodiments of this application, the display 194 displays interface content currently output by a system. For example, the interface content is an interface of application data management.

The terminal 100 may implement an image shooting function by using the ISP, the camera 193, the video codec, the GPU, the display 194, the application processor, and the like.

The ISP may be configured to process data fed back by the camera 193.

The camera 193 is configured to capture a static image or a video. In some embodiments, the terminal 100 may include one or N cameras 193, where N is a positive integer greater than 1.

The digital signal processor is configured to process a digital signal, and may process another digital signal in addition to the digital image signal. For example, when the terminal 100 selects a frequency, the digital signal processor is configured to perform Fourier transformation on frequency energy.

The video codec is configured to compress or decompress a digital video.

The NPU is a neural-network (neural-network, NN) computing processor, quickly processes input information by referring to a structure of a biological neural network, for example, a transfer mode between human brain neurons, and may further continuously perform self-learning.

The external memory interface 120 may be used to connect to an external memory card, for example, a micro SD card, to extend a storage capability of the terminal 100. The external memory card communicates with the processor 110 through the external memory interface 120, to implement a data storage function. For example, a music file or a video file is stored in the external storage card.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a sound playing function or an image playing function), and the like. The data storage area may store data (for example, audio data and a phone book) and the like created when the terminal 100 is used.

The terminal 100 may implement an audio function by using the audio module 170, the speaker 170A, the receiver 170B, the microphone 170C, the headset jack 170D, the application processor, and the like, for example, music playing, recording, and the like.

The audio module 170 is configured to convert digital audio information into an analog audio signal for output, and is also configured to convert analog audio input into a digital audio signal. The audio module 170 may be further configured to code and decode an audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal.

The gyroscope sensor 180B may be configured to determine a moving posture of the terminal 100.

The barometric pressure sensor 180C is configured to measure barometric pressure.

The magnetic sensor 180D includes a Hall sensor. The terminal 100 may detect opening and closing of a flip cover by using the magnetic sensor 180D.

The acceleration sensor 180E may detect values of accelerations of the terminal 100 in various directions (usually on three axes). A magnitude and a direction of gravity may be detected when the terminal 100 is still. The acceleration sensor 180E may be further configured to identify a posture of the electronic device, and is used in an application like switching between a landscape mode and a portrait mode or a pedometer.

The distance sensor 180F is configured to measure a distance.

The optical proximity sensor 180G may include, for example, a light emitting diode (LED) and an optical detector, for example, a photodiode.

The ambient light sensor 180L is configured to sense ambient light brightness.

The fingerprint sensor 180H is configured to collect a fingerprint.

The temperature sensor 180J is configured to detect a temperature.

The touch sensor 180K is also referred to as a "touch panel".

The bone conduction sensor 180M may obtain a vibration signal.

The button 190 includes a power button, a volume button, and the like. The button 190 may be a mechanical button, or may be a touch button.

The motor 191 may generate a vibration prompt.

The indicator 192 may be an indicator light, and may be configured to indicate a charging status, a power change, and the like.

The SIM card interface 195 is configured to connect to a SIM card.

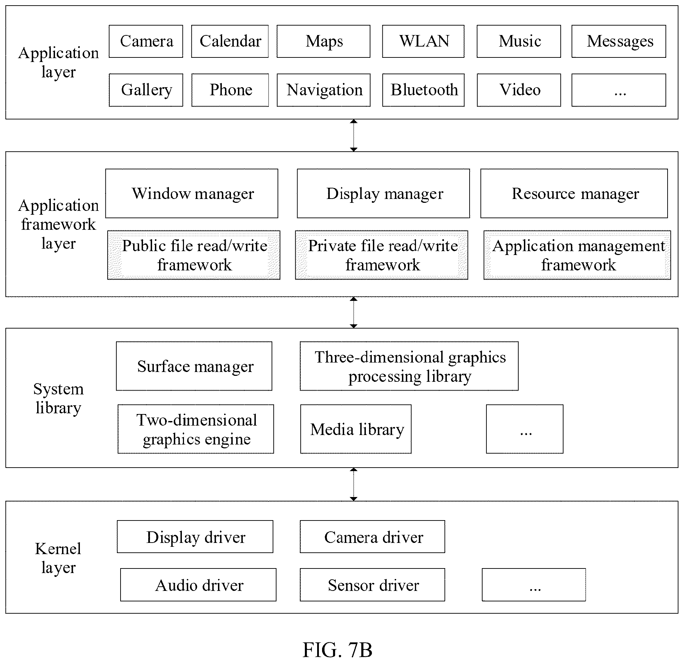

FIG. 7B shows a block diagram of a software structure of the terminal 100 according to an embodiment of this application.

In a layered architecture, software is divided into several layers, and each layer has a clear role and task. The layers communicate with each other through a software interface. In some embodiments, an operating system is divided into five layers: an application layer, an application framework layer, a hardware abstraction layer (hard abstraction layer, HAL) (not shown in FIG. 7B), and a kernel layer from top to bottom.

The application layer may include a series of application packages.

As shown in FIG. 7B, the application packages may include applications like Camera, Gallery, Calendar, Phone, Maps, Navigation, WLAN, Bluetooth, Music, Video, Game, Shop, Travel, real-time communication (For example, Messages). In addition, the application package may further include system applications such as a home screen (that is, a desktop), a leftmost screen, a control center, and a notification center.

The application framework layer provides an application programming interface (application programming interface, API) and a programming framework for an application at the application layer. The application framework layer includes some predefined functions.

As shown in FIG. 7B, the application framework layer may include a public file read/write framework, a private file read/write framework, an application management framework, an input manager, a window manager (window manager), a view system, a phone manager, a resource manager, a notification manager, a display manager, and the like. For ease of description, in FIG. 7B, an example in which the application framework layer includes the window manager, the display manager, the resource manager, the public file read/write framework, the private file read/write framework, and the application management framework is used for illustration. It should be noted that the application management framework may invoke interfaces in the public file read/write framework and the private file read/write framework.

The public file read/write framework is configured to provide an application with an interface for reading a file and an interface for writing a file, for example, a public file write interface and a public file read interface.

The public file write interface may further be specifically classified, based on file categories, into a video write sub-interface, an audio write sub-interface, a sub-interface for writing an image shot by a camera, a sub-interface for writing a file received or downloaded in a short range, an image write sub-interface, and a document write sub-interface. Correspondingly, the public file read interface may further be specifically classified, based on file categories, into a video read sub-interface, an audio read sub-interface, a sub-interface for reading an image shot by a camera, a sub-interface for reading a file received or downloaded in a short range, a sub-interface for reading another image, and a document read sub-interface.

The private file read/write framework is configured to provide an interface for reading a private file and an interface for writing a private file for an application. The application may write the private file into a private file storage area through the private file read/write interface.

The application management framework is used to install an application, uninstall an application, and manage an application file. It should be understood that the application management framework may read a file and write a file in a process of managing an application. Therefore, the application management framework needs to frequently invoke the public file read/write framework and the private file read/write framework.

The input manager is configured to receive instructions or a request reported by a lower layer like the kernel layer or the hardware abstraction layer.

The window manager is configured to manage a window program. The window manager may obtain a size of the display, determine whether there is a status bar, perform screen locking, take a screenshot, and the like.

The view system includes visual controls such as a control for displaying a text and a control for displaying an image. The view system may be configured to construct an application program. A display interface may include one or more views.

The display manager is configured to transmit display content to the kernel layer.

The phone manager is configured to provide a communication function for the terminal 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction.

The kernel library includes two parts: a function that needs to be called in Java language and a kernel library of Android.

The application layer and the application framework layer run on a virtual machine. The virtual machine executes Java files of the application layer and the application framework layer as binary files. The virtual machine is configured to implement functions such as object lifecycle management, stack management, thread management, security and exception management, and garbage collection.

A system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The hardware abstraction layer HAL layer is an interface layer between operating system software and hardware components, and provides an interface for interaction between upper-layer software and lower-layer hardware. The HAL layer abstracts underlying hardware as software that includes a corresponding hardware interface. The underlying hardware device may be set by accessing the HAL layer. For example, a related hardware component may be enabled or disabled at the HAL layer. In some embodiments, a core architecture of the HAL layer includes at least one of C++ or C.

The kernel layer is a layer between hardware and software. The kernel layer includes at least a display driver, a camera driver, an audio driver, a sensor driver, a driver of a touch control chip, an input (input) system, and the like. For ease of description, in FIG. 7B, an example in which the kernel layer includes the input system, the driver of the touch chip, the display driver, and a storage driver is used for illustration. The display driver and the storage driver may be jointly disposed in a driver module.

It may be understood that the structure shown in this application does not constitute a specific limitation on the terminal 100. In some other embodiments, the terminal 100 may include more or fewer components than those shown in the figure, or some components may be combined, or some components may be split, or there may be a different component layout. The components shown in the figure may be implemented by hardware, software, or a combination of software and hardware.

The following separately describes in detail a procedure of an application data management method provided in this application. The application data management method is described separately based on a plurality of application scenarios such as installing an application on the terminal 100, writing data into the terminal 100 by the application, reading data from the terminal 100 by the application, managing data of the application by the terminal 100, and uninstalling the application by the terminal 100. An example in which the terminal 100 is a mobile phone 10 and the application is a first application is used for description. It should be understood that the terminal 100 may alternatively be an electronic device like a tablet or a computer. A type of the terminal 100 is not specifically limited in this application.

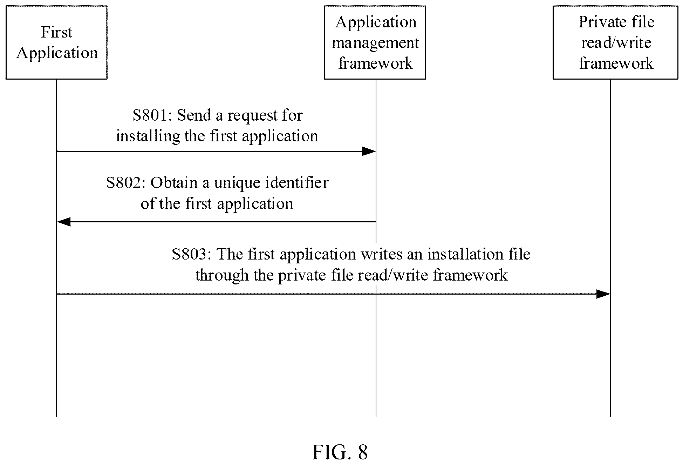

With reference to FIG. 8, the following describes in detail a process of installing the first application on the mobile phone 10.

S801: The first application sends a request for installing the first application to an application management framework.

A user may download an application by using an application store of the mobile phone 10, or download an application by using a browser in the mobile phone 10. When the user sends, in the application store or the browser, a request for installing the first application, the first application sends, by using the application store or the browser, the request for installing the application to the application management framework of the mobile phone 10.

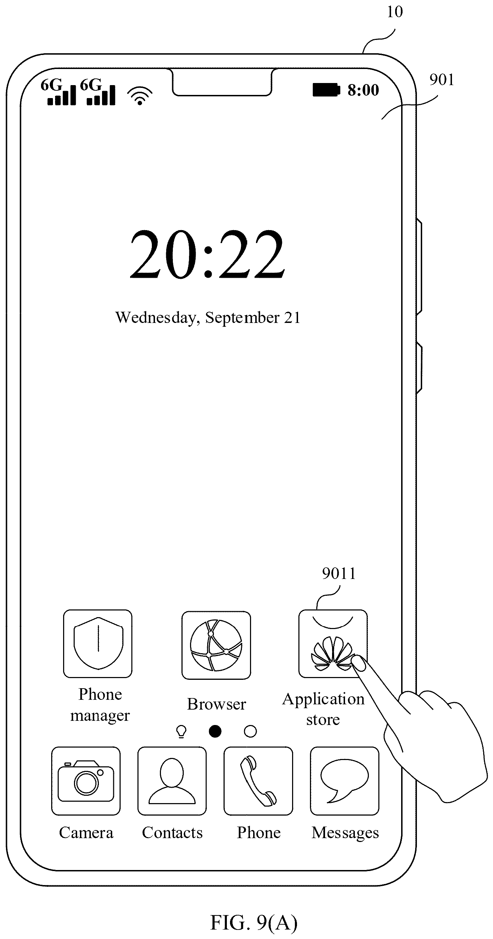

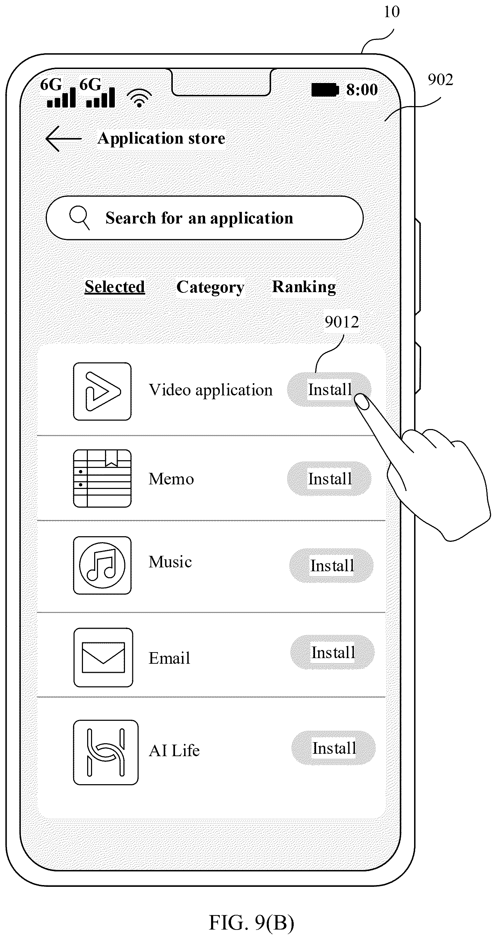

For example, as shown in FIG. 9(A), an interface 901 is a home screen of the mobile phone 10, and the mobile phone 10 may detect a touch operation performed on an application store icon 9011 in the interface 901 (for example, a tap operation on the icon 9011), and start the application store in response to the operation. As shown in FIG. 9(B), an interface 902 is an interface of the application store, and the user may download various required applications in the application store. For example, the user may tap a control 9012 corresponding to a video application, and the mobile phone 10 detects a touch operation performed on the control 9012, that is, the application management framework of the mobile phone 10 obtains a request for installing the video application.

S802: Obtain a unique identifier of the first application.

After the application management framework detects the request for installing the first application, the application management framework of the mobile phone 10 obtains the unique identifier of the first application.

S803: The first application writes an installation file through a private file read/write framework.

The first application writes the installation file of the first application into storage space of the mobile phone 10 through the private file read/write framework. The installation file of the application includes an application package (application package, APK) file.

In some embodiments, after the application management framework detects that the first application writes the installation file through the private file read/write framework, the application management framework further parses the installation file like the APK file, to obtain information such as a component and a configuration file of the first application, so that the first application can run on the mobile phone 10.

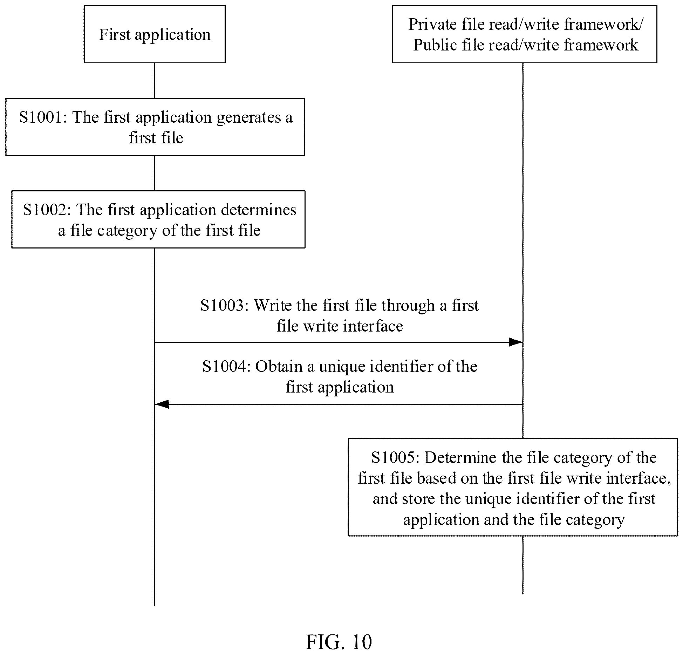

With reference to FIG. 10, the following describes in detail a process in which the first application writes data into the mobile phone 10.

S1001: The first application generates a first file.

The first application generates data during running. The data generated by the first application includes a private file generated during running of the first application, a file like an image, a video, or audio that is stored by the user by using the first application, an APK file obtained when the first application needs to be updated, a driver program required during running of the first application, and the like.

S1002: The first application determines a file category of the first file.

The first application determines the file category of the first file based on a file read/write interface provided by the mobile phone 10, so that the first application can invoke a corresponding interface to write the data.

For example, the file generated by the first application may be classified into a private file and a public file based on whether the file can be shared with another application. The public file is a file that can be shared by the application with another application, for example, an image, a video, and audio. The private file is a file that is not shared with another application, for example, a user password, chat records, and database records in the application.

In some embodiments, if the first file is the public file, the first application further classifies the first file based on a file category, and determines a category to which the first file belongs, including a video, audio, an image shot by a camera, a file received or downloaded in a short range, another image, and a document.

S1003: The first application writes the first file through a first file write interface.

The first application determines, based on the file category of the first file, an interface that needs to be invoked to write the first file, and writes the first file based on the corresponding interface. For example, the first file write interface is invoked, and the first file write interface corresponds to the file category of the first file.

In some embodiments, the mobile phone 10 has a plurality of file write interfaces. The file write interfaces may include a private file write interface and a public file write interface. The public file write interface further includes a video write sub-interface, an audio write sub-interface, a sub-interface for writing an image shot by the camera, a sub-interface for writing a file received or downloaded in a short range, an interface for writing another image, and a document write sub-interface.

S1004: The mobile phone 10 obtains the unique identifier of the first application from the first application.

When receiving writing of the first file by the first application, the mobile phone 10 further obtains the unique identifier of the first application from the first application, to determine the application to which the first file belongs.

S1005: The mobile phone 10 determines the file category of the first file based on the first file write interface, and stores the unique identifier of the first application and the file category.

The mobile phone 10 can determine the file category based on the file write interface that is invoked when the first application writes the first file or an interface parameter. The mobile phone 10 further stores the file category of the first file, an absolute path of the first file, and the unique identifier of the first application in an information record table.

In some embodiments, the mobile phone 10 may determine, based on whether the first application invokes the private file write interface, the video write sub-interface, the audio write sub-interface, the sub-interface for writing the image shot by the camera, the interface for writing another image, or the document write sub-interface, whether the first file is the private file, or the video, the audio, the camera, or the another image in the public file.

In some other embodiments, when the first application invokes the public file write interface, the mobile phone 10 may further determine the file category of the first file based on a category parameter of the public file write interface invoked by the first application. The public file write interface further includes different category parameters such as a video, audio, an image or a video shot by the camera, a file received or downloaded in a short range, another image, and a document.

In some other embodiments, after receiving writing of the first file by the first application, the mobile phone 10 further writes the first file into a corresponding directory in a preset folder of the mobile phone 10 based on the file write interface, where the preset folder includes each file category.

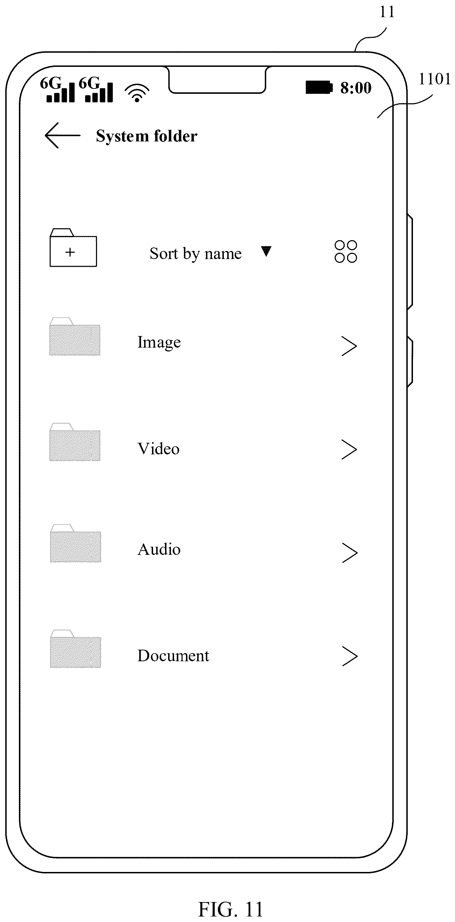

For example, as shown in FIG. 11, an interface 1101 shows the preset folder of the mobile phone 10. The preset folder further specifically includes an image folder, a video folder, an audio folder, and a document folder. The image folder is used to store a file written through the interface for writing another image, the video folder is used to store a file written through the video write sub-interface, the audio file folder is used to store a file written through the audio write sub-interface, and the document file folder is used to store a file written through the document write sub-interface.

In some embodiments, because the private file is a file that is not shared with another application, when the first application is not deleted, only the first application can read and write data in the private file folder. Therefore, the mobile phone 10 does not display the folder in which the private file is stored.

In some other embodiments, the mobile phone 10 further writes data such as the absolute path, a file size, and creation time of the first file into the information record table.

With reference to FIG. 12, the following describes in detail a process for managing the data of the first application.

S1201: The application management framework obtains a request for managing a file of the first application.

The mobile phone 10 further includes an application like a phone manager. The application is used to manage data in the mobile phone 10 through the application management framework. The user may manage the data of the first application based on the application like the phone manager. When the mobile phone 10 obtains an operation of managing a file by the user, the mobile phone 10 further obtains, from the information record table, applications to which all files belong, and then displays an application list. The user may tap a target application in the application list to manage a file of the target application.

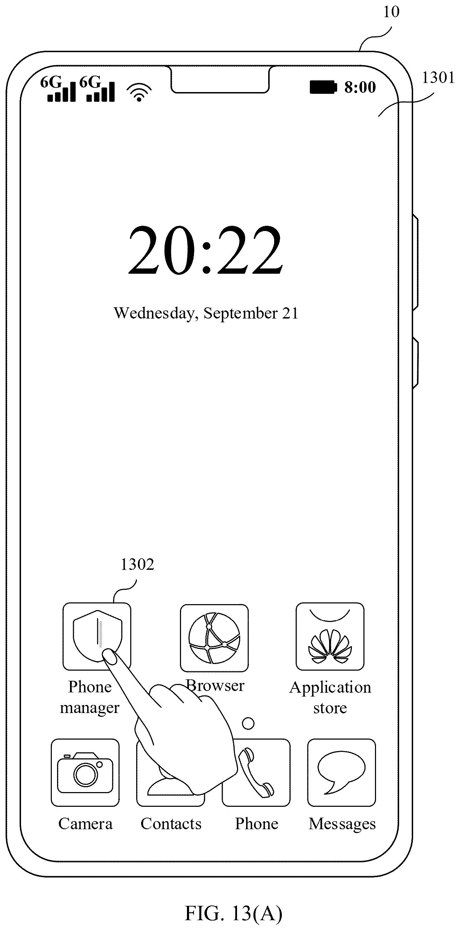

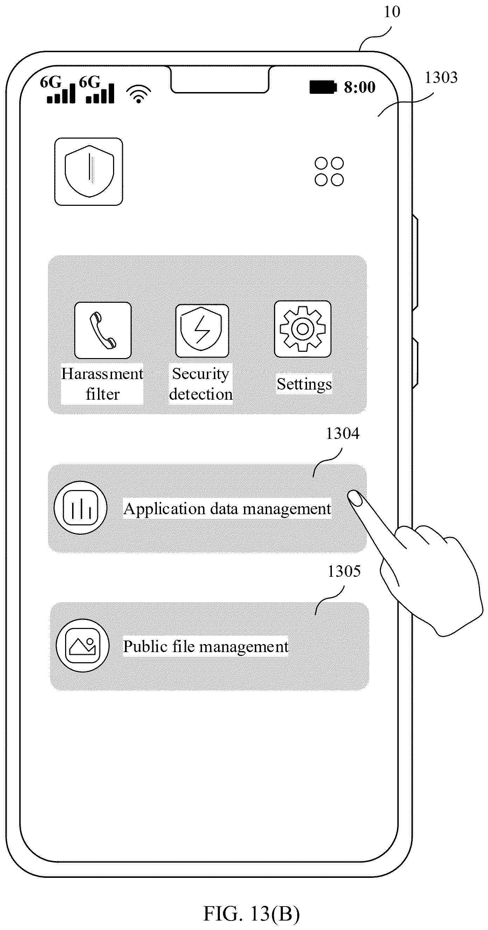

For example, as shown in FIG. 13(A), an interface 1301 is a home screen of the mobile phone 10, and the mobile phone 10 may detect a touch operation performed on a phone manager icon 1302 in the interface 1301. In response to the foregoing operation, the mobile phone 10 runs the phone manager application. As shown in FIG. 13(B), an interface 1303 is an interface diagram after the phone manager is run. The phone manager may manage a file through the application management framework based on categories of applications and public files.

When the mobile phone 10 detects a touch operation performed on an application data management display bar 1304, the mobile phone 10 displays each application and a size of storage space occupied by the application. The mobile phone 10 obtains an operation of selecting the first application by the user, that is, the mobile phone 10 obtains the request for managing the data of the first application. For details, refer to the interface shown in FIG. 6(A). Details are not described herein again.

S1202: The application management framework displays the file of the first application based on a file category.

The application management framework displays a file category list based on a file category that is of a file belonging to the first application and that is in the information record table. For details, refer to the interface shown in FIG. 6(B). Details are not described herein again. In some embodiments, the application management framework is only used to obtain information about the file of the first application, and a framework like a window manager is further required to display the information about the file of the first application on a display of the mobile phone 10.

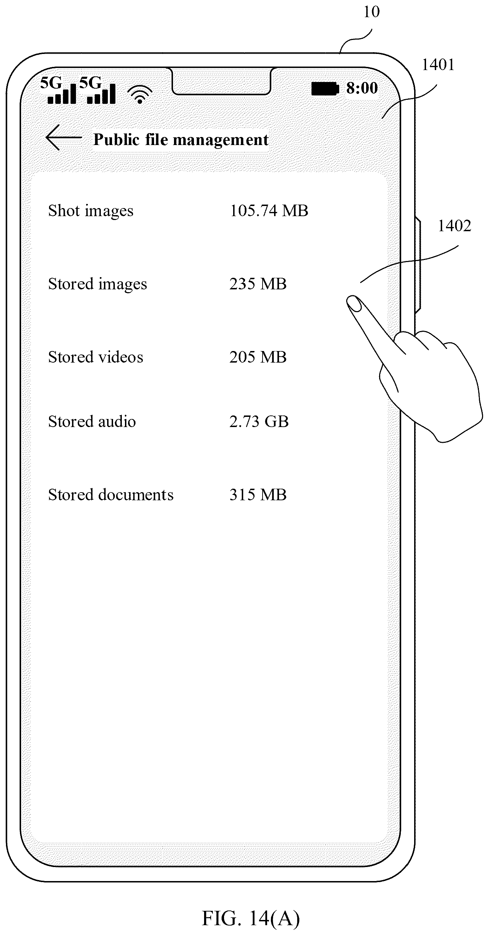

In some embodiments, the application management framework may first display a file category list, and then display, when the user selects a target file category, a list of an application that has a file of the target file category. For example, the user selects a public file management display bar 1305 in the interface shown in FIG. 13(B), and in response to a user operation, as shown in FIG. 14(A), the application management framework displays data of all applications based on shot images, stored images, stored videos, stored audio, and stored documents as shown in an interface 1401, and displays a size of storage space occupied by a file in each category.

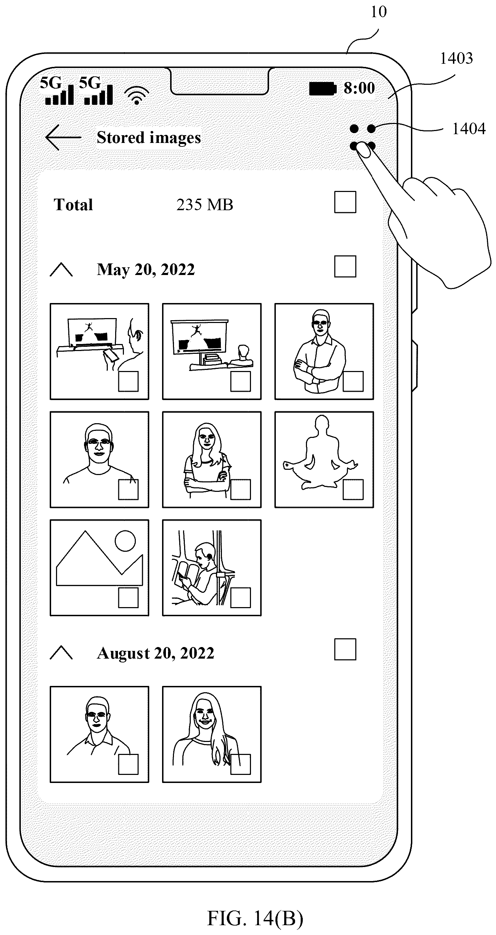

The application management framework detects a touch operation performed on files in a specific category, and the application management framework displays the files in the category. The application management framework can display the files in the category through sort by applications to which the files belong. As shown in FIG. 14(A), the mobile phone 10 detects a touch operation performed on a display bar 1402 corresponding to the "stored images", and the mobile phone 10 displays an interface 1403 shown in FIG. 14(B) based on file data obtained by the application management framework. Data in the mobile phone 10 that is written through an image interface is displayed in the interface 1403.

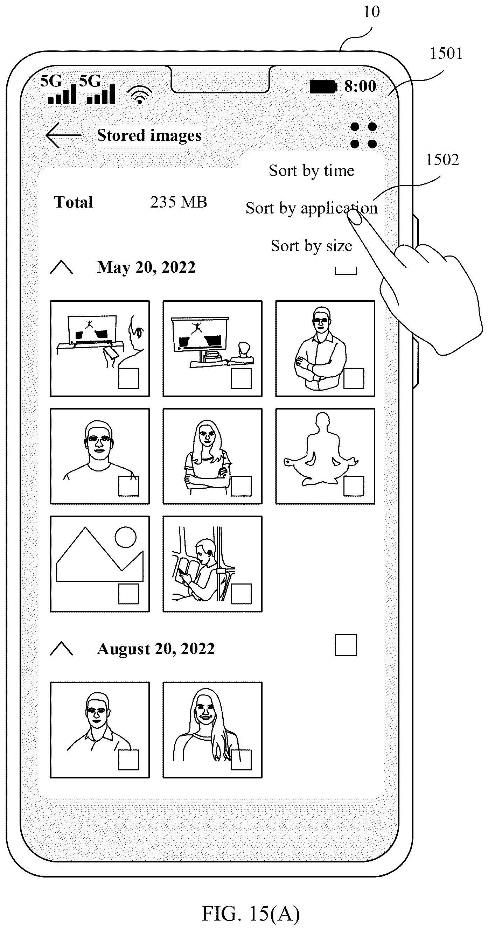

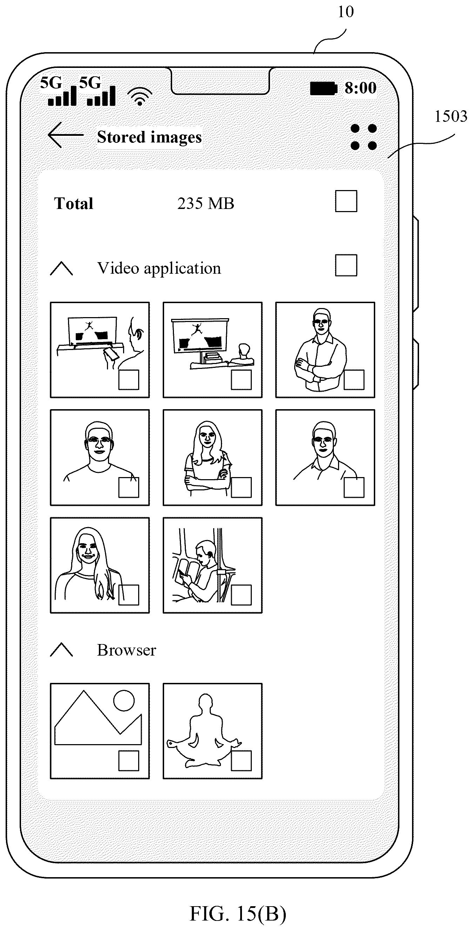

The application management framework displays files in different sort manners, for example, by time, by application, or by size. As shown in FIG. 14(B), the interface 1403 includes a control 1404. The control 1404 is configured to change a file sort manner. The application management framework detects a touch operation performed on the control 1404. As shown in FIG. 15(A), a plurality of sort manners are displayed in an interface 1501, including sort by time, sort by application, and sort by size. The mobile phone 10 detects a touch operation performed on a control 1502 corresponding to sort by application. As shown in FIG. 15(B), an example of a result of sorting stored images by application is shown in an interface 1503, and the images include images stored in the video application and the browser.

S1203: The application management framework obtains a request of the user for performing a first operation on a target file.

The application management framework obtains a touch operation performed on the target file of the first application, which indicates that the user needs to perform a corresponding operation on target data. An operation that can be performed includes moving, deleting, copying, sharing, printing, renaming, and the like.

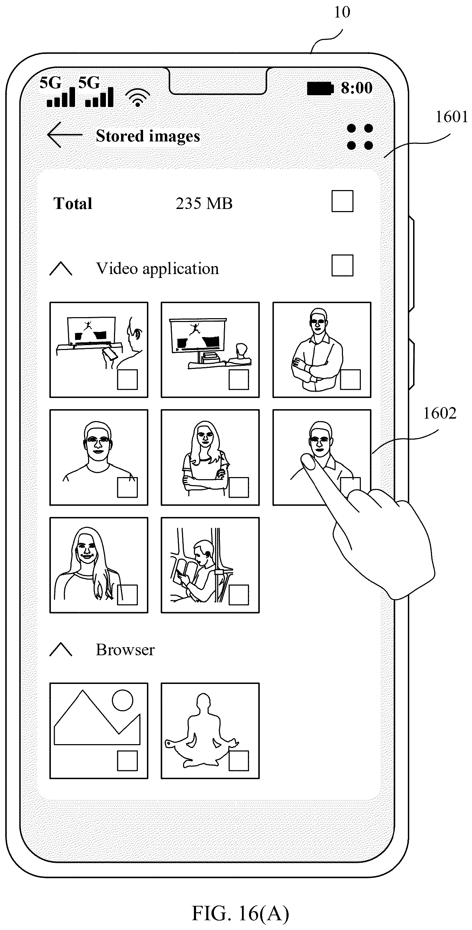

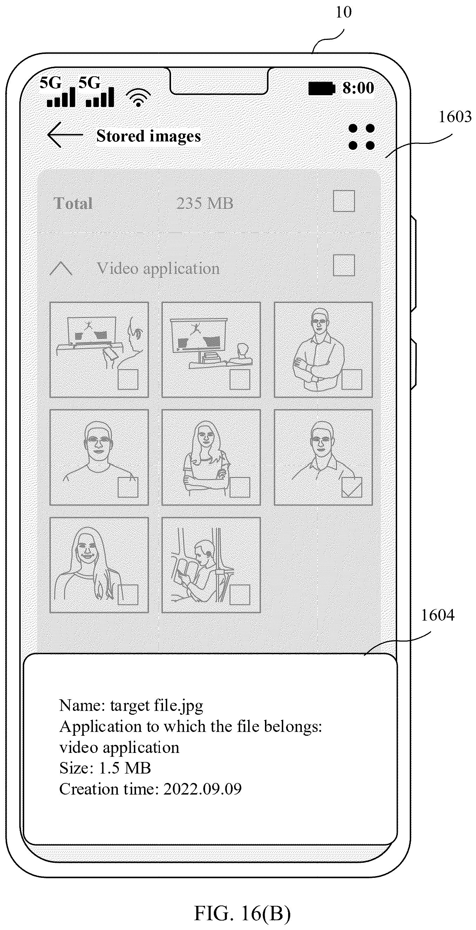

In some embodiments, before performing the first operation on the target data, the user may further view detailed information about the target file, for example, a file name, a file size, and creation time. Specifically, as shown in FIG. 16(A), the user selects, by tapping an icon of an image 1602 in an interface 1601, the image 1602 in the images stored in the video application. As shown in FIG. 16(B), the application management framework displays a prompt box 1604 in an interface 1603, and detailed information about the image 1602 is shown in the prompt box 1604, where the detailed information about the image 1602 includes a name: "target file.jpg", the application: the first application, an image size: 1.5 MB, and creation time: 2022.09.09.

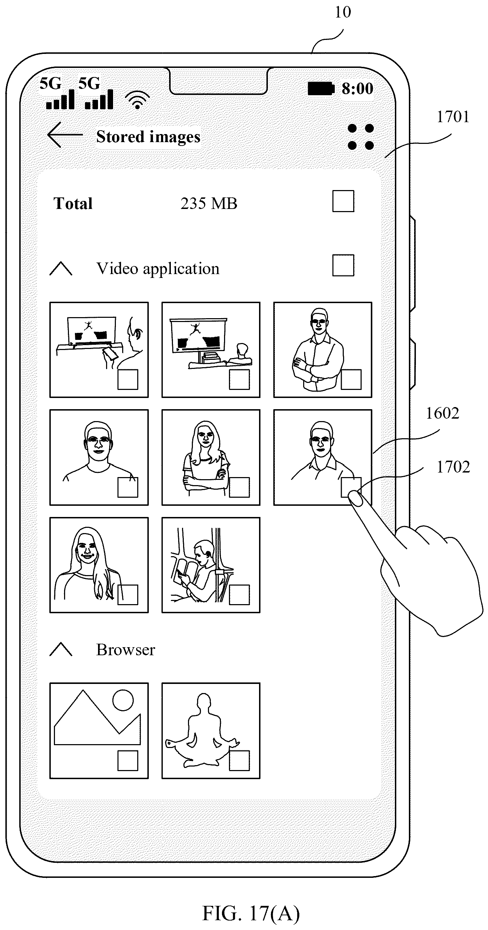

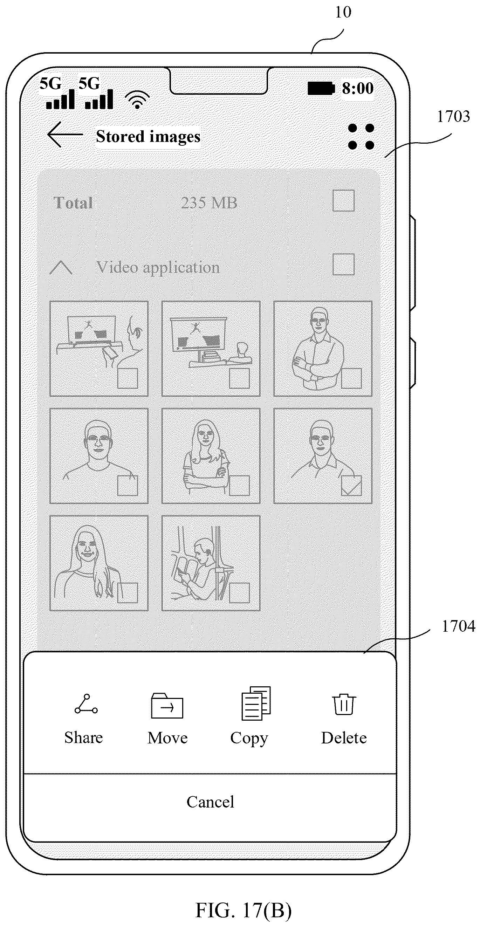

The user may further perform an operation on an image by tapping a control on the image. As shown in FIG. 17(A), the user taps a control 1702 on the icon of the image 1602 in an interface 1701, and then an interface shown in FIG. 17(B) is displayed. Operations that can be performed by the user on the image 1602, for example, sharing, moving, copying, and deleting, are shown in a prompt box 1704 in an interface 1703. The user may select an operation that needs to be performed on the image 1602 based on a requirement.

S1204: The application management framework processes the target file based on the first operation.

The application management framework processes the target data based on the obtained request of the user for performing the first operation on the target data.

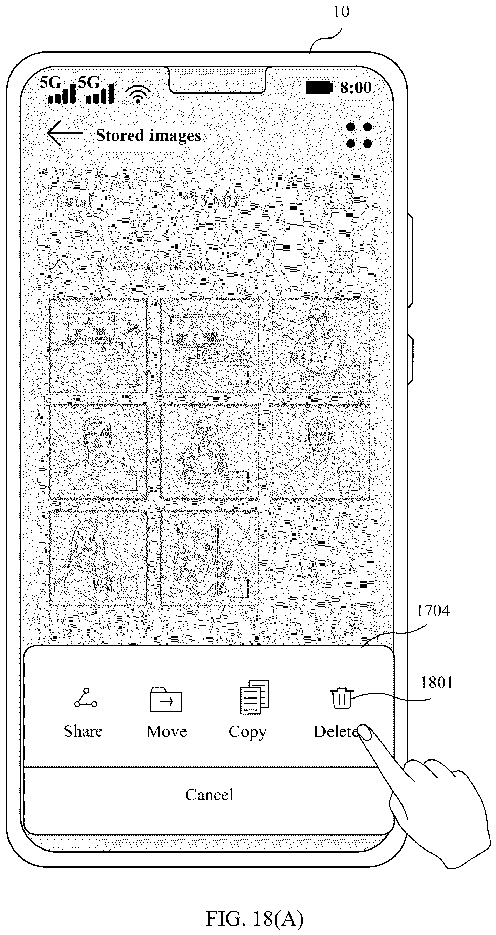

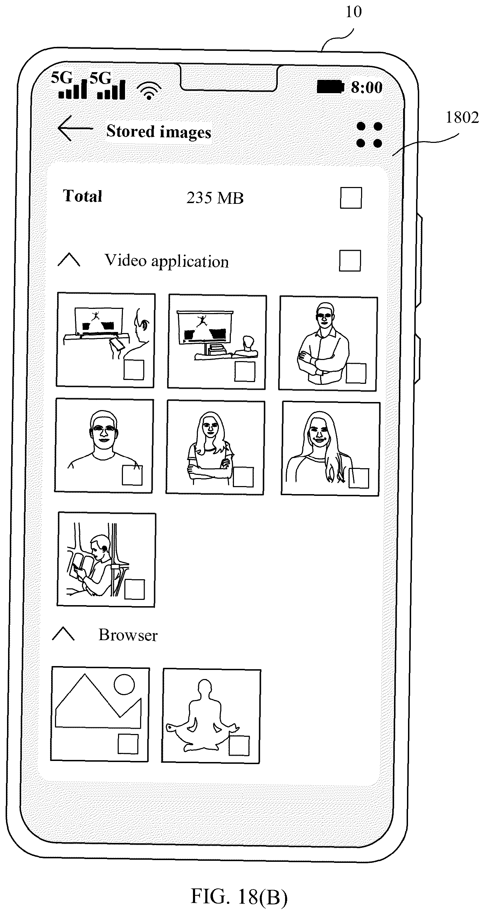

For example, as shown in FIG. 18(A), the application management framework detects a touch operation performed on a deletion icon 1801 in the prompt box 1704, and the mobile phone 10 deletes the image 1602. Correspondingly, as shown in FIG. 18(B), the image 1602 is no longer displayed in the interface 1802.

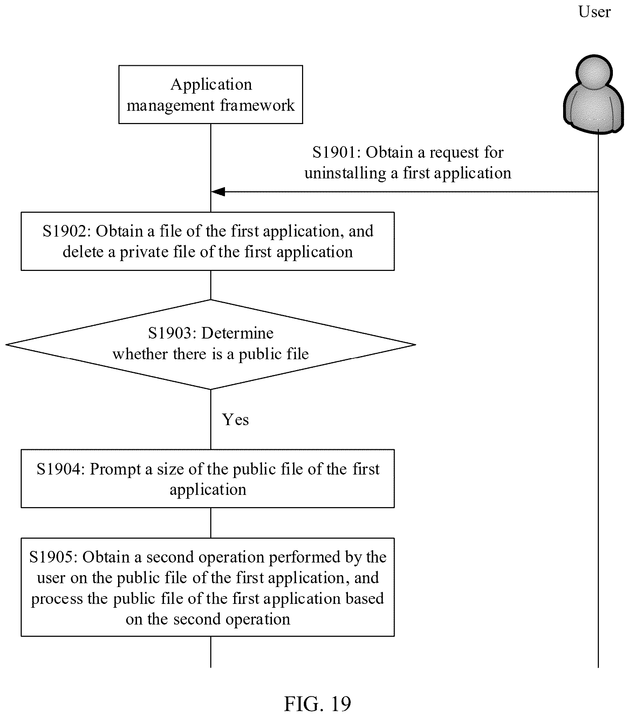

With reference to FIG. 19, the following describes in detail a process of uninstalling the first application from the mobile phone 10.

S1901: The application management framework obtains a request for uninstalling the first application.

The user can delete an application by using the phone manager or directly delete an application. When the application management framework obtains the user operation, it is considered that the application management framework obtains the request for uninstalling the first application.

Refer FIG. 6(B). The user may delete the video application by using the phone manager. When the application management framework detects a touch operation performed on a control 1064, it may be considered that the mobile phone 10 obtains a request for uninstalling the video application.

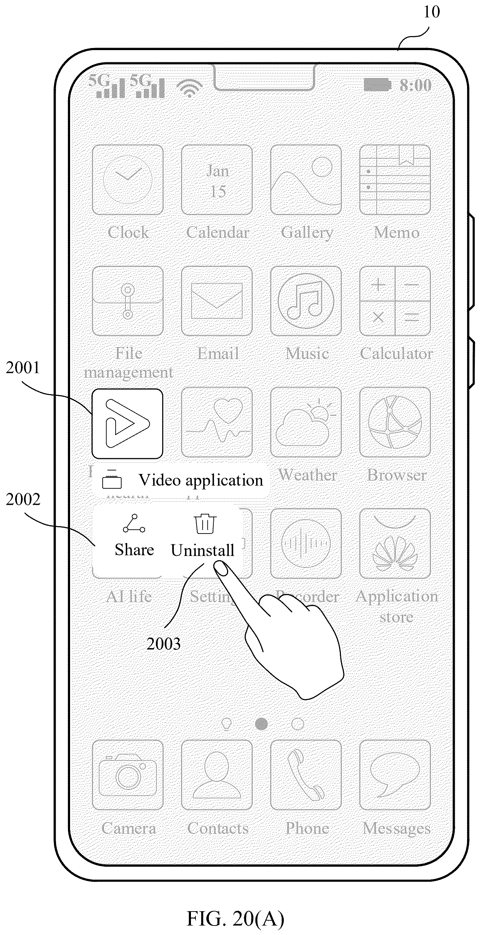

Alternatively, as shown in FIG. 20(A). The application management framework detects a touch and hold operation performed on an icon 2001 of the video application, and the mobile phone 10 displays a prompt box 2002. When the mobile phone 10 detects a touch operation based on an uninstallation control 2003, it may be considered that the mobile phone 10 obtains a request for uninstalling the video application.

S1902: The application management framework obtains the file of the first application, and deletes a private file of the first application.

The application management framework determines, based on the information record table, data that belongs to the first application and that is in the mobile phone 10, and then determines the private file of the first application based on the file categories in the information record table. When uninstalling the first application, the mobile phone 10 deletes the private file of the first application.

In some embodiments, the information record table may not record the private file. The mobile phone 10 stores the private file in an internal memory, and the application management framework directly reads the private file of the first application from the internal memory based on the unique identifier of the first application.

S1903: The application management framework determines whether there is a public file.

When uninstalling the first application, the application management framework further determines, based on the file categories in the information record table, whether there is the public file, where the public file may be read and written by another application. If a determining result is yes, step S 1904 is performed; or if a determining result is no, uninstallation of the first application is completed.

S1904: The mobile phone 10 prompts a size of the public file of the first application.

When the application management framework detects, based on the file category that is of the file of the first application and that is in the information record table, that the public file of the first application is still not deleted from the mobile phone 10, the application management framework prompts information indicating that the mobile phone 10 still stores the public file of the first application.

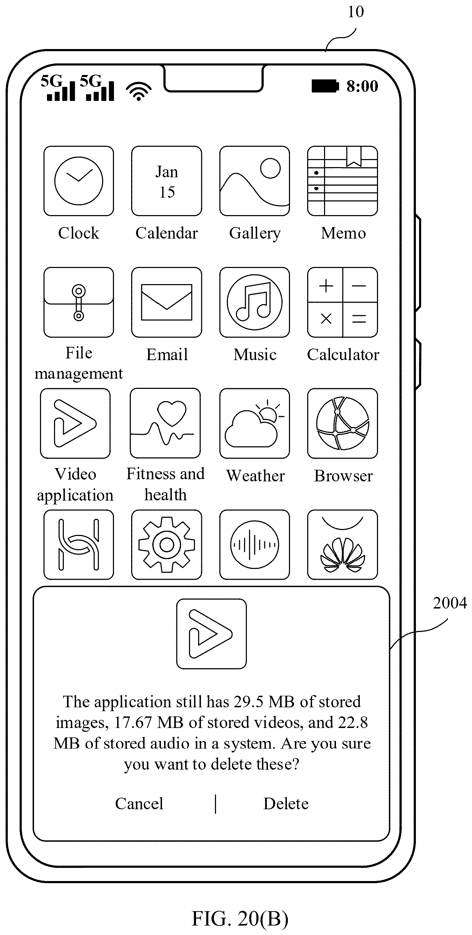

As shown in FIG. 20(B), after detecting, based on the application management framework, the request for deleting the video application, the phone manager displays a prompt box 2004 to prompt, to the user, the information indicating that the mobile phone 10 still stores the public file of the first application.

In some embodiments, the mobile phone 10 further determines, based on the file category that is of the file of the first application and that is in the information record table, a specific file category that is in the public file and to which a file belongs, for example, a video, audio, an image shot by the camera, a file received or downloaded in a short range, another image, and a document. Then, a size of a file in each of the foregoing file categories is prompted to the user.

S1905: The application management framework obtains a second operation performed by the user on the public file of the first application, and processes the public file of the first application based on the second operation.

The user may choose, based on a prompt of the mobile phone 10, to delete or retain the public file of the first application, and the application management framework deletes or retains media data of the first application based on the user operation.

In some embodiments, when uninstalling the first application, the application management framework may alternatively first process the public file, and then delete the private file.

In conclusion, in the application data management method provided in this embodiment of this application, a specified file write interface is set in the terminal, a file category of a file in the storage space can be determined through an interface used when an application writes data, and an application to which the file belongs can be determined based on a unique identifier of the application that writes the file. In the method, no extra human resource is required to analyze the file category, and therefore, the user does not delete a file by mistake due to an error in file category analysis. Therefore, the terminal 100 can classify files in the storage space based on applications, and can further classify files of each application based on file categories, or classify files based on file categories and then based on applications. In this way, the user can manage the files based on a file classification result of the terminal 100. This saves labor resources, and further improves user experience.

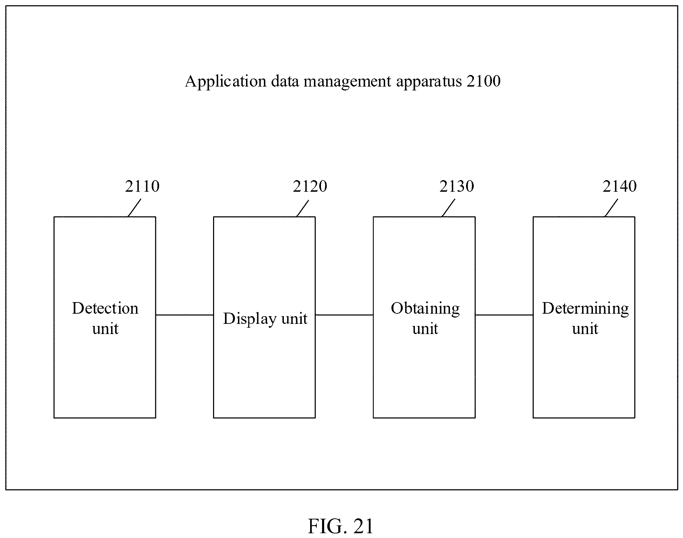

To resolve a problem that a user cannot conveniently manage storage space, this application provides an application data management apparatus. As shown in FIG. 21, an application data management apparatus 2100 may include a detection unit 2110, a display unit 2120, an obtaining unit 2130, and a determining unit 2140.

The detection unit 2110 is configured to detect a first operation for accessing a file of a terminal device, and the display unit 2120 is configured to display a first interface when the first operation for accessing the file of the terminal device is detected, where the first interface includes a first application list, and an application in the first application list is an application to which the file of the terminal device belongs.

The detection unit 2110 is further configured to detect a second operation of selecting a first application in the first application list. The display unit 2120 is further configured to display a second interface when the second operation of selecting the first application in the first application list is detected, where the second interface includes a first file category list, and a file category in the first file category list is a part or all of a plurality of preset file categories.

The detection unit 2110 is further configured to detect a third operation of selecting a first file category in the first file category list, and the display unit 2120 is further configured to display a third interface when that the first file category in the first file category list is selected is detected, where the third interface includes a file that is of the first application and that belongs to the first file category.

In some other embodiments, the detection unit 2110 is further configured to detect a sixth operation for accessing the file of the terminal device. The display unit 2120 is further configured to display a fourth interface when the sixth operation for accessing the file of the terminal device is detected, where the fourth interface includes the first file category list, the file category in the first file category list is a file category to which the file of the terminal device belongs, and the file category in the first file category list is a part or all of the plurality of preset file categories.

In some other embodiments, the detection unit 2110 is further configured to detect a seventh operation of selecting the first file category in the first file category list. The display unit 2120 is further configured to display a fifth interface when the seventh operation of selecting the first file category in the first file category list is detected, where the fifth interface includes a first application list, and an application in the first application list is an application to which a file belonging to the first file category list belongs.

In some other embodiments, the detection unit 2110 is further configured to detect an eighth operation of selecting the first application in the first application list. The display unit 2120 is further configured to display a sixth interface when the eighth operation of selecting the first application in the first application list is detected, where the sixth interface includes a file that is in the first file category and that belongs to the first application.

In some other embodiments, the detection unit 2110 is further configured to detect a fourth operation of writing the first file into the terminal device. The obtaining unit 2130 is configured to: in response to the fourth operation, obtain a unique identifier of an application to which the first file belongs and determine a file category to which the first file belongs, where the file category to which the first file belongs is one of a plurality of preset file categories. The determining unit 2140 is further configured to record, in an information record table, the unique identifier of the application to which the first file belongs and the file category to which the first file belongs.

In some other embodiments, the detection unit 2110 is further configured to detect the fourth operation of writing the first file into the terminal device by invoking a first file write interface. The obtaining unit 2130 is further configured to obtain a unique identifier of the application that invokes the first file write interface. The determining unit 2140 is further configured to determine a file category corresponding to the first file write interface as the file category to which the first file belongs, where the plurality of preset file categories each correspond to one file write interface. Alternatively, the determining unit 2140 is further configured to determine a file category indicated by a category parameter of the first file write interface as the file category to which the first file belongs, where the plurality of preset file categories each correspond to one category parameter of the first file interface.

In some other embodiments, the first file write interface is located at a framework layer of the terminal device.

In some other embodiments, the detection unit 2110 is further configured to detect a fifth operation of uninstalling the first application. The determining unit 2140 is further configured to determine a plurality of files of the first application based on unique identifiers of applications to which the plurality of files belong in the information record table. The determining unit 2140 is further configured to determine, based on file categories and file sizes that are of a plurality of files of the first application and that are in the information record table, sizes of storage space occupied by files in different file categories in the files of the first application. The display unit 2120 is further configured to display the sizes of the storage space respectively occupied by the files in different file categories in the files of the first application.

In conclusion, in the application data management apparatus provided in this embodiment of this application, a specified file write interface is set in the terminal, a file category of a file in the storage space can be determined through an interface used when an application writes data, and an application to which the file belongs can be determined based on a unique identifier of the application that writes the file. According to the apparatus, no extra human resource is required to analyze the file category, and therefore, the user does not delete a file by mistake due to an error in file category analysis. Therefore, the terminal 100 can classify files in the storage space based on applications, and can further classify files of each application based on file categories, or classify files based on file categories and then based on applications. In this way, the user can manage the files based on a file classification result of the terminal 100. This saves labor resources, and further improves user experience.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the processes or functions according to embodiments of this application are all or partially generated.

The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner.

The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the processes of the methods in embodiments may be implemented by a computer program instructing relevant hardware. The program may be stored in a computer-readable storage medium. When the program runs, the processes of the method embodiments are performed. The foregoing storage medium includes any medium that can store program code, for example, a read-only memory (read-only memory, ROM), a random access memory (random access memory, RAM), a magnetic disk, or an optical disc.

## Claims

1. An application data management method, applied to a terminal device, wherein the method comprises:
displaying a first interface when a first operation for accessing a file of the terminal device is detected, wherein the first interface comprises a first application list, and an application in the first application list is an application to which the file of the terminal device belongs;
displaying a second interface when a second operation of selecting a first application in the first application list is detected, wherein the second interface comprises a first file category list, a file category in the first file category list is a file category to which a file of the first application belongs, and the file category in the first file category list is a part or all of a plurality of file categories preset by a system of the terminal device; and
displaying a third interface when a third operation of selecting a first file category in the first file category list is detected, wherein the third interface comprises a file that is of the first application and that belongs to the first file category.

2. The application data management method according to claim 1, wherein the method further comprises:
displaying a fourth interface when a fourth operation of selecting a second application in the first application list is detected, wherein the fourth interface comprises a second file category list, a file category in the second file category list is a file category to which a file of the second application belongs, and the file category in the second file category list is a part or all of the plurality of file categories preset by the system; and
displaying a fifth interface when a fifth operation of selecting a second file category in the second file category list is detected, wherein the fifth interface comprises a file that is of the second application and that belongs to the second file category.

3. The application data management method according to claim 2, wherein
the first application list and the first file category list are determined based on an information record table of the terminal device, wherein the information record table comprises a unique identifier of the application to which the file of the terminal device belongs and a file category to which the file of the terminal device belongs.

4. The application data management method according to claim 3, wherein the method further comprises:
detecting a sixth operation of writing a first file into the terminal device;
in response to the sixth operation, obtaining a unique identifier of an application to which the first file belongs, and determining a file category to which the first file belongs, wherein the file category to which the first file belongs is one of the plurality of file categories preset by the system; and
recording, in the information record table, the unique identifier of the application to which the first file belongs and the file category to which the first file belongs.

5. The application data management method according to claim 4, wherein
the detecting a sixth operation of writing a first file into the terminal device comprises: detecting the sixth operation of writing the first file into the terminal device by invoking a first file write interface; and
the obtaining a unique identifier of an application to which the first file belongs comprises: obtaining a unique identifier of an application that invokes the first file write interface; and/or
the determining a file category to which the first file belongs comprises:
determining a file category corresponding to the first file write interface as the file category to which the first file belongs, wherein the plurality of file categories preset by the system each correspond to one file write interface; or determining a file category indicated by a category parameter of the first file write interface as the file category to which the first file belongs, wherein the plurality of file categories preset by the system each correspond to one category parameter of the first file interface.

6. The application data management method according to claim 5, wherein
the first file write interface is located at a framework layer of the terminal device.

7. The application data management method according to any one of claims 3 to 6, wherein the method further comprises:
detecting a seventh operation of uninstalling the first application;
determining a plurality of files of the first application based on unique identifiers that are of applications to which a plurality of files belong and that are in the information record table;
determining, based on file categories and file sizes that are of the plurality of files of the first application and that are in the information record table, sizes of storage space occupied by files in different file categories in the files of the first application; and
displaying the sizes of the storage space respectively occupied by the files in the different file categories in the files of the first application.

8. An application data management method, applied to a terminal device, wherein the method comprises:
displaying a first interface when a first operation for accessing a file of the terminal device is detected, wherein the first interface comprises a first file category list, a file category in the first file category list is a file category to which the file of the terminal device belongs, and the file category in the first file category list is a part or all of a plurality of file categories preset by a system of the terminal device;
displaying a second interface when a second operation of selecting a first file category in the first file category list is detected, wherein the second interface comprises a first application list, and an application in the first application list is an application to which a file belonging to the first file category list belongs; and
displaying a third interface when a third operation of selecting a first application in the first application list is detected, wherein the third interface comprises a file that is in the first file category and that belongs to the first application.

9. The application data management method according to claim 8, wherein
the first application list and the first file category list are determined based on an information record table of the terminal device, wherein the information record table comprises a unique identifier of an application to which the file of the terminal device belongs and the file category to which the file of the terminal device belongs.

10. The application data management method according to claim 9, wherein the method further comprises:
detecting a fourth operation of writing a first file into the terminal device;
in response to the fourth operation, obtaining a unique identifier of an application to which the first file belongs, and determining a file category to which the first file belongs, wherein the file category to which the first file belongs is one of the plurality of file categories preset by the system; and
recording, in the information record table, the unique identifier of the application to which the first file belongs and the file category to which the first file belongs.

11. The application data management method according to claim 10, wherein
the detecting a fourth operation of writing a first file into the terminal device comprises: detecting the fourth operation of writing the first file into the terminal device by invoking a first file write interface; and
the obtaining a unique identifier of an application to which the first file belongs comprises: obtaining a unique identifier of an application that invokes the first file write interface; and/or
the determining a file category to which the first file belongs comprises:
determining a file category corresponding to the first file write interface as the file category to which the first file belongs, wherein the plurality of file categories preset by the system each correspond to one file write interface; or determining a file category indicated by a category parameter of the first file write interface as the file category to which the first file belongs, wherein the plurality of preset file categories each correspond to one category parameter of the first file interface.

12. The application data management method according to claim 11, wherein
the first file write interface is located at a framework layer of the terminal device.

13. The application data management method according to any one of claims 9 to 12, wherein the method further comprises:
detecting a fifth operation of uninstalling the first application;
determining a plurality of files of the first application based on unique identifiers that are of applications to which a plurality of files belong and that are in the information record table;
determining, based on file categories and file sizes that are of the plurality of files of the first application and that are in the information record table, sizes of storage space occupied by files in different file categories in the files of the first application; and
displaying the sizes of the storage space respectively occupied by the files in the different file categories in the files of the first application.

14. An application data management method, applied to a terminal device, wherein the method comprises:
detecting a first operation of writing a first file into the terminal device;
in response to the first operation, obtaining a unique identifier of an application to which the first file belongs, and determining a category to which the first file belongs, wherein the category to which the first file belongs is one of a plurality of categories preset by a system of the terminal device; and
recording the unique identifier of the application to which the first file belongs and the file category to which the first file belongs.

15. An electronic device, comprising a processor and a memory, wherein the memory is configured to store instructions, the processor is configured to execute the instructions, and when executing the instructions, the processor performs the method according to any one of claims 1 to 7, or performs the method according to any one of claims 8 to 13, or performs the method according to claim 14.

16. A computer program product, wherein the computer program product comprises computer instructions, and when the computer instructions are executed by an electronic device, the electronic device performs the method according to any one of claims 1 to 7, or performs the method according to any one of claims 8 to 13, or performs the method according to claim 14.

17. A computer-readable storage medium, comprising instructions, wherein when the instructions are run on an electronic device, the electronic device is caused to perform the method according to any one of claims 1 to 7, or perform the method according to any one of claims 8 to 13, or performs the method according to claim 14.
